(19) Europäisches Patentamt
European Patent Office
Office européen des brevets

(11) EP 2 392 600 B1

(12) **EUROPEAN PATENT SPECIFICATION**

(45) Date of publication and mention of the grant of the patent:
**23.12.2015 Bulletin 2015/52**

(51) Int Cl.:
***C08F 8/42*** *(2006.01)* ***C08G 65/336*** *(2006.01)*
***C08L 63/00*** *(2006.01)* ***C07F 7/12*** *(2006.01)*

(21) Application number: **11155430.9**

(22) Date of filing: **06.07.2009**

(54) **Polymer having a reactive silicon-containing group, methods for its preparation and a curable composition comprising the polymer**

Polymer mit einer reaktiven Silizium enthaltenden Gruppe, Verfahren zu deren Herstellung und das Polymer enthaltende vernetzbare Zusammensetzung

Polymère avec un groupe réactif silylé, méthodes pour sa préparation et composition curable contenant le polymère

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.07.2008 JP 2008178319**
**08.07.2008 JP 2008178327**
**08.07.2008 JP 2008178334**
**28.08.2008 JP 2008219862**
**28.04.2009 JP 2009109474**

(43) Date of publication of application:
**07.12.2011 Bulletin 2011/49**

(62) Document number(s) of the earlier application(s) in accordance with Art. 76 EPC:
**09794393.0 / 2 308 884**

(73) Proprietor: **KANEKA CORPORATION**
**Osaka (JP)**

(72) Inventors:
- **Wakabayashi, Katsuyu**
**Takasago-shi Hyogo 651-2137 (JP)**
- **Tanaka, Hidenori**
**Settsu-shi Osaka 566-0072 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 818 368**

Remarks:
The file contains technical information submitted after the application was filed and not included in this specification

EP 2 392 600 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a reactive silicon group-containing polymer.

### Background Art

A halohydrosilane compound (A) represented by the general formula (1):

$$H\text{-}SiR^2_c(CR^2_{3-b}Y_b)_aX_{3-a-c} \qquad (1)$$

(wherein, $R^1$ each independently represents a hydrogen atom or a substituted or unsubstituted hydrocarbon group having 1 to 20 carbon atoms, $R^2$ each independently represents a substituted or unsubstituted hydrocarbon group having 1 to 20 carbon atoms; X each independently represents a halogen atom; Y represents a group selected from a halogen atom, $-OR^3$, $-NR^4R^5$, $-N=R^6$, $-SR^7$ (wherein $R^3$, $R^4$, $R^5$, and $R^7$ each represent a hydrogen atom or a substituted or unsubstituted hydrocarbon group having 1 to 20 carbon atoms; and $R^6$ represents a bivalent substituted or unsubstituted hydrocarbon group having 1 to 20 carbon atoms), a perfluoroalkyl group having 1 to 20 carbon atoms, and a cyano group (hereinafter, these may be also referred to collectively as "hetero substituent"); a is 1 or 2; b is any one of 1, 2 and 3; c is 1 or 0; and the sum of a and c does not exceed 2) is a unique silane compound characterized by having a halogen substituent, a hydrosilyl group, and a hydrocarbon group having a hetero substituent at an $\alpha$-position (hereinafter, may be also referred to as heteromethyl group) on a silicon atom. The halogen substituent is a hydrolyzable group, and yields silanol upon hydrolysis and can form a siloxane bond by further subjected to a silanol condensation reaction. In addition, the hydrosilyl group can not only act as a hydrolyzable group, but also add to olefin or the like by a hydrosilylation reaction. The heteromethyl group included as another substituent can serve as, for example, in the case of a halomethyl group such as chloromethyl group, a Grignard reactant by way of a reaction with metal magnesium, and also has a characteristic feature capable of converting into other substituent by a nucleophilic substitution reaction. Furthermore, due to having a hetero substituent in the vicinity of a silicon atom ($\alpha$-position), an inductive effect caused by the difference in electronegativity of hetero substituent and carbon atom affects also other substituent on the silicon atom, and thus an effect of enhancing reactivity of the hydrolyzable group may be achieved.

In an example of use of this halohydrosilane compound (A), a reactive silicon group-containing polymer may be obtained by adding a halohydrosilane compound (A) to a polymer having a vinyl group by a hydrosilylation reaction. As is disclosed in Patent Document 1 and the like, the reactive silicon group-containing polymer has a property of forming a siloxane bond through a reaction of the reactive silicon group by means of moisture, etc., whereby the polymer is crosslinked to give a cured product. The reactive silicon group-containing polymer obtained using a halohydrosilane compound (A) is expected to exhibit a high activity. Additionally, in another example of use, a halohydrosilane compound (A) is converted into an alkoxysilane compound that has milder hydrolyzability and more favorable handlability, and thus a reactive silicon group-containing polymer is obtained similarly to the example described above.

Although a halohydrosilane compound (A) has such very unique characteristic features, and is envisaged to be applicable in versatile fields, there exist very few examples of production so far due to difficulty in production.

One problem in production is that a halohydrosilane compound (A) has both a halogen substituent and a hydrosilyl group on a silicon atom. As a method for producing a silane compound (halohydrosilane) having both a halogen substituent and a hydrosilyl group on a silicon atom, a method basically using a direct process proposed by E. G. Rochow, *et al.* to produce $HSiCH_3Cl_2$, $HSi(CH_3)_2Cl$ and the like (Nonpatent Document 1), or a method in which $HSiCl_3$ obtained by allowing metal silicon and hydrogen chloride to react is used as a starting material is exemplified. In other words, the method allows these starting materials to react with an organic metal reagent, thereby converting chlorine into an organic group (referred to as "method (1)"). However, to synthesize various types of halohydrosilanes is difficult since it is necessary to selectively substitute only a part of chlorine atoms. Additionally, elimination of hydrosilyl groups may occur depending on reaction conditions. Still further, to obtain the heteromethyl group-containing halohydrosilane of the present invention by the method (1) is not only difficult in terms of the synthesis but also industrially disadvantageous since it is necessary to use a metal reactant such as, for example, chloromethyl lithium, which is very unstable and must be handled at an extremely low temperature.

Under such circumstances, a partial reduction method in which chlorine of an organotrichlorosilane, organodichlorosilane or the like is partially substituted with hydrogen (referred to as "method (2)") was proposed in Patent Document 2, Nonpatent Document 2, and the like. Although an organomonochlorosilane ($R_2SiClH$) is successfully synthesized from an organodichlorosilane ($R_2SiCl_2$) in many cases according to this method, there are just few examples of successfully synthesizing an organodichlorosilane ($RSiCl_2H$) from an organotrichlorosilane ($PSiCl_3$). Moreover, it is difficult to control the reactivity since a hydride reducing agent is used, leading to high possibility of reducing the chloromethyl group to give a methyl group by a mechanism as disclosed in, for example Nonpatent Document 3, in order to obtain the heteromethyl group-containing halohydrosilane of the present invention.

As an alternative method, a partial chlorination method of a polyhydrosilane (referred to as "method (3)") was proposed in Patent Document 3, and the like. This method can be industrially disadvantageous due to increased steps for hydrogenation of an organotrichlorosilane once, followed by chlorination again in order to obtain an organotrihydrosilane as a starting material.

**Prior Art Documents**

**Patent Document**

Patent Document 1: JP-A No. S52-73998
Patent Document 2: JP-B No. S55-34798
Patent Document 3: JP-A No. H5-239073

**Nonpatent Document**

Nonpatent Document 1: "J. Am. Chem. Soc.", 1945, volume 67, page 1772
Nonpatent Document 2: "J. Organometal Chem.", volume 18, page 371
Nonpatent Document 3: "J. Organometal Chem.", volume 30, page 349

**DISCLOSURE OF THE INVENTION**

**Problems to be Solved by the Invention**

From the reasons as described above, to synthesize a heteromethyl group-containing halohydrosilane is very difficult, and there exist only several examples of synthesis such as an example of synthesis of chloromethyldichlorosilane by allowing trichloromethane to react with diazomethane, etc., as shown in INORGANIC SYNTHESES., 6, 37 (1960), and the like. However, diazomethane is a very dangerous chemical substance, and particular attention is required for handling. The present invention provides a method for producing a polymer having a heteromethyl group-substituted reactive silyl group in an industrially advantageous manner.

**Means for Solving the Problems**

The present inventors elaborately investigated for solving the foregoing problems, and consequently accomplished the invention as defined by the claims.

**Effects of the Invention**

In addition, a reactive silicon group-containing polymer produced using the silane exhibits superior curability, even though a non-tin catalyst is used.

**Mode for Carrying out the Invention**

Hereinafter, (I) a method for producing a heteromethyl group-containing halohydrosilane, (II) a method for producing a heteromethyl group-containing alkoxyhydrosilane, (III) a heteromethyl group-substituted reactive silicon group-containing polymer, a method for producing the same, and a curable composition containing the same are explained in detail.

(I) Heteromethyl Group-Containing Halohydrosilane Compound

The present invention can use (A) a halohydrosilane compound represented by the general formula (1):

$$H\text{-}SiR^2_c(CR^1_{3-b}Y_b)_aX_{3-a-c} \qquad (1)$$

(wherein, $R^1$ each independently represents a hydrogen atom or a substituted or unsubstituted hydrocarbon group having 1 to 20 carbon atoms, $R^2$ each independently represents a substituted or unsubstituted hydrocarbon group having 1 to 20 carbon atoms; X each independently represents a halogen atom; Y represents a group selected from a halogen atom, $-OR^3$, $-NR^4R^5$, $-N=R^6$, $-SR^7$ (wherein $R^3$, $R^4$, $R^5$, and $R^7$ each represent a hydrogen atom or a substituted or unsubstituted hydrocarbon group having 1 to 20 carbon atoms; and $R^6$ represents a bivalent substituted or unsubstituted hydrocarbon group having 1 to 20 carbon atoms), a perfluoroalkyl group having 1 to 20 carbon atoms, and a cyano group; a is 1 or 2; b is any one of 1, 2 and 3; c is 1 or 0; and the sum of a and c does not exceed 2), obtainable by a method including allowing (B) a halosilane compound represented by the general formula (2):

$$SiR^2_c(CR^1_{3-b}Y_b)_aY_{4-a-c} \qquad (2)$$

(wherein, $R^1$, $R^2$, X, Y, a, b and c are as defined above) to react with (C) a hydrosilane compound. This reaction is also referred to as a redistribution reaction or a proportional reaction.

The halohydrosilane compound (A) represented by the general formula (1) is characterized by having a hydrocarbon group (hereinafter, may be also referred to as "heteromethyl group") having a substituent Y on a carbon atom at a position 1, together with a hydrosilyl group and a halogen group.

X consists of a halogen substituent such as fluorine, chlorine, bromine, or iodine, and in light of availability of the source material, chlorine is preferred. When the number of X is two or more, they may be the same or different.

Illustrative examples of Y specifically include: halogen substituents such as fluorine, chlorine, bromine, and iodine; alkoxy groups such as a methoxy group, an ethoxy group, an isopropenoxy group, and a phenoxy group; nitrogen-based substituents such as a diethylamino group, a 1-piperidino group, and a methylethylketimino group; sulfur-based substituents such as a mercapto group, and a methylthio group; perfluoroalkyl groups such as a trifluoromethyl group, and a pentafluoroethyl group; a cyano group; and the like, but not limited thereto. In particular, in light of ease in introduction, Y is preferably a halogen substituent, an alkoxy group, or a nitrogen-based substituent, more preferably a halogen substituent, and particularly preferably chlorine.

Specific examples of substituent $R^1$ include a hydrogen atom, a methyl group, an ethyl group, a vinyl group, a phenyl group and the like, but not limited thereto. Among them, a hydrogen atom is preferred due to low effects of steric hindrance, and favorable availability.

Specific examples of substituent $R^2$ include a methyl group, an ethyl group, a vinyl group, a phenyl group and the like, but not limited thereto. Among these, a methyl group is preferred due to low effects of steric hindrance, and favorable availability.

Although a is 1 or 2, it is more preferably 1 in light of availability.

Although b is any one of 1, 2 and 3, it is more preferably 1 in light of ease in introduction of Y, and availability of the halosilane (B).

Although c is 0 or 1, it is more preferably 0 in light of availability.

Illustrative examples of the halohydrosilane (A) specifically include chloromethyldichlorosilane ($HSi(CH_2Cl)Cl_2$), dichloromethyldichlorosilane ($HSi(CHCl_2)Cl_2$), trichloromethyldichlorosilane ($HSi(CCl_3)Cl_2$), chloromethylmethylchlorosilane, ($HSi(CH_2Cl)(CH_3)Cl$), bis(chloromethyl)chlorosilane ($HSi(CHCl_2)_2Cl$), 1-chloroethyldichlorosilane ($HSi(CH_2ClCH_3)Cl_2$), fluoromethyldifluorosilane ($HSi(CH_2F)F_3$), bromomethyldibromosilane $CHSi(CH_2Br)Br_2$), iodomethyldiiodosilane ($HSi(CH_2I)I_2$), 1-bromobenzyldibromosilane ($HSi(CHBrC_6H_5)Br_2$), methoxymethyldichlorosilane ($HSi(CH_2OCH_3)Cl_2$), ethoxymethyldichlorosilane ($HSi(CH_2OC_2H_5)Cl_2$), N,N-diethylaminomethyldichlorosilane ($HSi(CH_2N(C_3H_5)_2)Cl_3$), piperidinomethyldichlorosilane ($HSi(CH_2N(CH_2)_5)Cl_2$), mercaptomethyldichlorosilane ($HSi(CH_2SH)Cl_2$) and the like, but not limited thereto.

Illustrative examples of the halosilane compound (B) specifically include chloromethyltrichlorosilane ($Si(CH_2Cl)Cl_3$), dichloromethyltrichlorosilane ($Si(CHCl_2)Cl_3$), trichloromethyltrichlorosilane ($Si(CCl_3)Cl_3$), chloromethylmethyldichlorosilane, ($Si(CH_2Cl)(CH_3)Cl_2$), bis(chloromethyl)dichlorosilane ($Si(CHCl_2)_2Cl_2$), 1-chloroethyltrichlorosilane ($Si(CH_2ClCH_3)Cl_3$), fluoromethyltrifluorosilane ($Si(CH_2F)F_3$), bromomethyltribromosilane ($Si(CB_2Br)Br_3$), iodomethyltriiodosilane ($Si(CH_2I)I_3$), 1-bromobenzyltribromosilane ($Si(CHBrC_6H_5Br_3$), methoxymethyltrichlorosilane ($Si(CH_2OCH_3)Cl_3$), ethoxymethyltrichlorosilane ($Si(CH_2OC_2H_5)Cl_3$), N,N-diethylaminomethyltrichlorosilane ($Si(CH_2N(C_2H_5)_2)Cl_3$), piperidinomethyltrichlorosilane ($Si(CH_2N(CH_2)_5)Cl_3$), mercaptomethyltrichlorosilane ($Si(CH_2SH)Cl_3$) and the like, but not limited thereto. In light of availability, chloromethyltrichlorosilane, dichloromethyltrichlorosilane, chloromethylmethyldichlorosilane, 1-chloroethyltrichlorosilane and bromomethyltribromosilane are more preferred, and chloromethyltrichlorosilane is particularly preferred.

The hydrosilane compound (C) used in the method for producing a silane compound is not particularly limited, and various types of compounds containing Si-H may be used. Specific examples of the hydrosilane (C) include organomonohydrosilanes such as diethylmethylsilane, triethylsilane, phenyldimethylsilane, tripropylsilane, diphenylmethylsilane, triphenylsilane, and trihexylsilane; organodihydrosilanes such as phenylmethylsilane, diphenylsilane, 1,1,3,3-tetramethyldisiloxane, and 1,1,3,3-tetramethyldisilazane; organotrihydrosilanes such as phenylsilane, and octylsilane; hydrolyzable group-containing hydrosilanes such as chlorodimethylsilane, dichloromethylsilane, dimethoxymethylsilane, ethoxydimethylsilane, dimethoxymethylsilane, triethoxysilane, and triisopropenoxysilane, as well as 1,3,5,7-tetramethylcyclotetrasiloxane (D4H), 1,3,5,7,9-tetramethylcyclopentasiloxane (D5H), methylhydrogenopolysiloxane (H oil), and the like.

The hydrosilane (C) is used for selectively substituting one Si-X group in the halosilane (B) with Si-H; however, not only a monohydrogenated product, but a dihydrogenated product and/or a trihydrogenated product may be yielded (side reaction (1)). In addition, the hetero substituent at an $\alpha$-position of the halosilane (B) may be substituted with a hydro group (reduced) (side reaction (2)). In an illustrative side reaction, it is probable to form chloromethylchlorosilane ($ClCH_2SiClH_2$) and/or chloromethylsilane ($ClCH_2SiH_3$) by the side reaction (1), when obtaining chloromethyldichlorosilane ($ClCH_2SiCl_2H$) is intended using chloromethyltrichlorosilane ($ClCH_2SiCl_3$). Also, according to the side reaction (2), it is probable to form methyltrichlorosilane ($CH_3SiCl_3$) and/or methyldichlorosilane ($CH_3SiCl_2H$).

(Cl) a monohydrosilane compound having only one hydro group on one silicon atom is preferably used as the hydrosilane (C) in order to selectively obtain the halohydrosilane (A). Specific examples of such a hydrosilane (Cl) include chlorodimethylsilane, ethoxydimethylsilane, dichloromethylsilane ($HSi(CH_3)Cl_2$), dimethoxymethylsilane, diethylmethylsilane, triethylsilane, tripropylsilane, dichlorophenylsilane, phenyldimethylsilane, diphenylmethylsilane, 1,1,3,3-tetramethyldisiloxane, 1,1,3,3-tetramethyldisilazane, 1,1,3,3,5,5-hexamethyltrisiloxane, D4H, D5H, H oil, and the like, but not limited thereto. Among these, dichloromethylsilane, triethylsilane, phenyldimethylsilane, D4H, H oil are preferred due to having high activities, and dichloromethylsilane is particularly preferred in light of availability.

Also, the monohydrosilane compound (Cl) represented by the general formula (3):

$$H\text{-}SiR^8{}_gZ_{3\text{-}g} \qquad (3)$$

(wherein, $R^8$ each independently represents a group selected from a substituted or unsubstituted hydrocarbon group having 1 to 20 carbon atoms, and $R^9{}_3SiO$- (wherein $R^3$ each independently represents a substituted or unsubstituted hydrocarbon group having 1 to 20 carbon atoms); Z each independently represents a group selected from a halogen atom, an alkoxy group, and an aryloxy group; and g is any one of 1, 2 and 3) is preferred since the side reaction (1) is likely to be suppressed.

Because the side reaction (2) tends to be suppressed, the monohydrosilane (Cl) in which g in the general formula (3) is 3 is preferably used. Specifically, illustrative examples include triethylsilane, tripropylsilane, tributylsilane, trihexylsilane, phenyldimethylsilane, diphenylmethylsilane, 1,1,1,3,5,5,5-heptamethyltrisiloxane, tris(trimethylsiloxy)silane, and the like, but not limited thereto. Of these, triethylsilane, and phenyldimethylsilane are preferred owing to favorable handlability.

Also, (C2) an arylhydrosilane compound represented by the general formula (4):

$$H_dSiR^{10}{}_eR^{11}{}_{4\text{-}d\text{-}e} \qquad (4)$$

(wherein, $R^{10}$ each independently represents a substituted or unsubstituted aromatic hydrocarbon group; $R^{11}$ each independently represents a group selected from a substituted or unsubstituted aliphatic hydrocarbon group having 1 to 20 carbon atoms, a halogen atom, an alkoxy group, and an aryloxy group; d is any one of 1, 2 and 3; e is any one of 1, 2 and 3; and the sum of d and e does not exceed 4) is preferably used as the hydrosilane (C) since a high reactivity is likely to be attained. Specifically, illustrative examples of the arylhydrosilane (C2) include phenylsilane, chlorophenylsilane ($C_6H_5SiClH_2$), dichlorophenylsilane ($C_6H_5SiCl_2H$), phenylmethylsilane, phenyldimethylsilane, diphenylsilane, diphenylmethylsilane, triphenylsilane, triflylsilane and the like, but not limited thereto. Since the halohydrosilane (A) as intended is likely to be obtained selectively, d is preferably 1. Since a high reactivity is likely to be attained, e is preferably 1 or 2.

Due to availability and ease in handling, dichloromethylsilane, phenylsilane, diphenylsilane, triethylsilane, phenyldimethylsilane, diphenylmethylsilane, D4H, or H oil is preferably used. Dichloromethylsilane is particularly preferred since it is available at low costs, and has high reactivity. Phenyldimethylsilane is particularly preferred since it is highly reactive and enables the side reaction to be easily controlled, and can provide the halohydrosilane (A) in high yield.

With respect to the hydrosilane (C) used in the method for producing a silane compound, the difference in boiling points of the obtained halohydrosilane (A) and (C') a halosilane compound generated as a by-product by halogenation of the hydrosilane (C) resulting from the reaction is preferably not lower than 4°C, more preferably not lower than 10°C, and particularly preferably not lower than 15°C. In addition, the hydrosilane (C) has a boiling point of preferably not lower than 40°C. When the boiling point is low, the reaction temperature cannot be elevated enough, and thus the reaction does not sufficiently proceed, or the reaction time period tends to be lengthened. Moreover, the halosilane (C') preferably has a higher boiling point than the halohydrosilane (A) since purification of the halohydrosilane (A) is facilitated.

Furthermore, when (B') a hydrosilane obtained by substitution of a halogen substituent X of the halosilane (B) with hydrogen is used as the hydrosilane (C), product types in the resulting reaction mixture can be reduced, whereby

the purification is facilitated, and in addition, the yield of the product can be elevated. For example, chloromethyltrichlorosilane may be reacted with chloromethyltrihydrosilane.

The amount of the hydrosilane (C) is such that the amount of Si-H included in the hydrosilane (C) is preferably from 0.1 molar equivalents to 5 molar equivalents, more preferably from 0.5 to 3 molar equivalents, and particularly preferably from 0.8 to 1.2 molar equivalents relative to the halosilane (B). When the amount of the hydrosilane (C) is small, the amount of the obtained halohydrosilane (A) is decreased. Additionally, when the amount of the hydrosilane (C) is large, the amount of by-products generated due to a side reaction is increased, whereby the yield of the halohydrosilane (A) may be lowered.

In the reaction of the halosilane (B) and the hydrosilane (C), (D) a catalyst is used. Illustrative examples of the catalyst (D) specifically include: halogenated quaternary ammonium salts such as tetrabutylammonium fluoride, tetrabutylammonium chloride, tetrabutylammonium bromide, tetrabutylammonium iodide, tributylmethylammonium chloride, tetraethylammonium chloride, benzyltributylammonium chloride, benzyltrimethylammonium chloride, phenyltrimethylammonium chloride, and methyltrioctylammonium chloride; quaternary phosphonium salts such as tetrabutylphosphonium chloride, and tetrabutylphosphonium bromide; tertiary amines such as tripropylamine, triisopropylamina, tributylamine, octyldimethylamine, and triphenylamine; ion exchange resins like weakly basic anion exchange resins such as Amberlyst A21 (manufactured by Organo Corporation), and Diaion(R) WA30 (manufactured by Mitsubishi Chemical Corporation); strongly basic anion exchange resins such as Amberlite IRA900JCL (manufactured by Organo Corporation), and Diaion(R) SA10A (manufactured by Mitsubishi Chemical Corporation); strongly acidic cation exchange resins such as Amberlyst 15JS-HG (manufactured by Organo Corporation), and Diaion(R) PK216 and Diaion(R) SK112 (manufactured by Mitsubishi Chemical Corporation); aminophosphoric acid group-containing ion exchange resins such as DUOLITE(R) C467 (manufactured by Sumika Chemtex Co., Ltd.); carriers to which a tertiary amino group or a quaternary ammonium group is covalently bound as disclosed in JP-A No. H6-9656; boron trifluoride, boron trichloride, aluminum trichloride, zirconium tetrachloride, $KAlCl_4$, CuCl, $H_3BO_3$, tris(dimethylamino)phosphine oxide, and the like, but not particularly limited thereto.

Of these, quaternary ammonium salts, and quaternary phosphonium salts are more preferable in light of the catalytic activity since many of these dissolve in a silane compound to form a homogenous system, and tetrabutylammonium chloride and tributylmethylammonium chloride are more preferred. In light of availability, tributylmethylammonium chloride is particularly preferred.

When a homogenous catalyst is used as the catalyst (D), it is preferably used in the range of preferably from 1 to 0.001 molar equivalents, more preferably from 0.5 to 0.005 molar equivalents, and particularly preferably from 0.3 to 0.007 molar equivalents relative to the halosilane compound (B). When the amount of the catalyst is below this range, a long period of time is required for the reaction, or the reaction may not proceed at all. When the amount is beyond this range, selectivity of the reaction may be lowered, and economical disadvantages may be obliged.

On the other hand, solid catalysts such as ion exchange resins have advantages of ease in removal of the catalyst after the reaction, controllability of side reactions, and ease in repeated use. Functional groups which may be included in the weakly basic anion exchange resin are exemplified by substituted or unsubstituted amino groups such as an amino group and a dimethylamino group. Functional groups which may be included in the strongly basic anion exchange resin are exemplified by a trimethylammonium chloride group ($-N(CH_3)_3^+Cl^-$). Functional groups which may be included in the strongly acidic cation exchange resin are exemplified by a sulfonic acid group ($-SO_3H$), a sulfonic acid sodium salt ($-SO_3Na$) and the like. Among the ion exchange resins, weakly basic anion exchange resins having a substituent amino group such as a dimethylamino group as a functional group like Amberlyst A21, and Diaion(R) WA30 are more preferred due to having a high activity, and Amberlyst A21 is particularly preferred.

When a non-homogenous catalyst is used as the catalyst (D), the amount thereof is not particularly limited, but at least 0.01 g is preferably used relative to 1 mmol of the halosilane compound (B).

According to the method for producing the silane compound (A), the temperature in the reaction is not especially defined, but falls within the range of preferably from 20°C to 110°C, and more preferably from 50°C to 100°C. When the reaction temperature is lower than this range, the reaction tends to proceed slowly. Furthermore, when the reaction temperature is higher than this range, the reactivity is improved but the rate of generation of by-products by the aforementioned side reaction is likely to increase.

As described above, when the rate of generation of by-products by the side reaction increases in the method for producing a silane compound, the yield of the intended halohydrosilane (A) is lowered. Unreacted halosilane (B) as well as dihydrogenated products and trihydrogenated products obtained by the side reaction (1) can be used again as a source material, or can be comparatively readily reused by subjecting to halogenation. On the other hand, it is difficult to reuse products reduced at the $\alpha$-position yielded in the side reaction (2), and purification of the halohydrosilane (A) may be difficult since the reduced products have the same molecular weight as the intended halohydrosilane (A). Therefore, suppression of the side reaction (2) as far as possible is preferred in the method.

For suppressing the side reaction (2), selection of the hydrosilane (C), and adjustment of the reaction temperature conditions as described above work effectively. In addition to these processes, a process in which the reaction

situation is traced in a timely manner to detect generation of the by-product by the side reaction (2) at an early stage, and then the reaction is interrupted also works effectively. More specifically, lowering of the yield of the halohydrosilane (A) can be suppressed by interrupting the reaction when the percentage, in the total amount of the halosilane (B) and the products derived from the halosilane (B), of the total amount of (K) a silane compound represented by the general formula (8):

$$H_f\text{-}Si(CR^1_{3-b}H_b)_aX_{4-a-f} \qquad (8)$$

(wherein, $R^1$, X, Y, a, and b are as defined above; f is any one of 0, 1, 2 and 3; and the sum of a and f does not exceed 4) yielded by the reaction of the halosilane (B) and the hydrosilane (C) exceeds a predetermined value. It is preferred that the reaction is interrupted before the percentage of the total amount of the silane (K) in the total amount of the halosilane (B) and products derived from the halosilane (B) exceeds preferably 30%, and more preferably 15%.

Although the method for tracing the reaction is not particularly limited, various processes such as a GC determination or an NMR determination may be used. Since there is a case in which the molecular weight of the halohydrosilane (A) becomes the same as that of the silane (K), a $^1$H-NMR determination is effectively used.

It is preferred to terminate the reaction at an appropriate reaction time by tracing the reaction, but the reaction time is preferably at least 10 min and shorter than 24 hrs, more preferably at least 0.5 hrs and shorter than 5 hrs, and particularly preferably at least 0.5 hrs and shorter than 3 hrs.

Although the atmosphere in which the reaction is carried out is not particularly limited, in order to suppress lowering of the reaction yield resulting from a hydrolysis reaction caused with the halosilane (B) and the hydrosilane (C) used as source materials, and the halohydrosilane compound (A) to be produced, it is preferable to carry out the reaction under a condition including a lower amount of water, and carrying out the reaction in an atmosphere of dry air, nitrogen, argon or the like is preferred. Further, not only a reaction vessel such as a glove box, but an apparatus which can maintain a dry condition even during handling of the source materials and also during storage may be preferably used.

Moreover, the halosilane (C') generated as a by-product may be regenerated to give the hydrosilane (C) by other reaction, and can be used for the production again. As the method for hydrogenation, hydrogen reduction, hydride reduction, redistribution with hydrosilane, and the like may be employed.

The halohydrosilane (A) may be used for a hydrosilylation reaction utilizing Si-H, hydrolysis utilizing Si-X, a condensation reaction, and the like as described above. Si-X can be further converted into other hydrolyzable silyl group such as an alkoxysilyl group, an aminosilyl group, etc. Moreover, the heteromethyl group of the halohydrosilane (A) can be used in converting into other substituent, or can enhance the reactivity of the hydrolyzable group on the silicon atom.

Specific use of the halohydrosilane (A) is illustratively shown below, but not limited thereto. (1) The halohydrosilane (A) is added to an unsaturated group-containing compound by a hydrosilylation reaction to obtain a reactive silicon group-containing compound that is highly hydrolyzable. For example, chloromethyldichlorosilane is added to allyl chloride by hydrosilylation, thereby capable of obtaining 3-chloropropyl(chloromethyl)dichlorosilane. This product can be used as a silane coupling agent, generally referred to, having both a hydrolyzable silicon group and other reactivity group, and as a source material of such a silane coupling agent, Since thus obtained silane coupling agent has a heteromethyl group on the silicon atom, it is believed to exhibit higher hydrolyzability. Also, the unsaturated group-containing compound may be a compound having a high molecular weight. For example, when the halohydrosilane (A) is used in introduction of a reactive silicon group of a reactive silicon group-containing organic polymer as disclosed in JP-A No. S52-73998 and the like, a reactive silicon group-containing organic polymer having very high reactivity can be obtained. Moreover, by alkoxidizing Si-X of the obtained polymer, handlability can be improved. (2) After a hydrolyzable silicon group-containing compound obtained in a similar manner to (1) is converted into a siloxane compound by a hydrolysis and condensation reaction, a halomethyl group is converted into a desired substituent by a nucleophilic substitution reaction or the like (e.g., a chloromethyl group may be converted into a diethylaminomethyl group). (3) The halohydrosilane (A) is allowed to react with methanol and/or trimethyl orthoformate to convert Si-X into an alkoxysilyl group, thereby obtaining a heteromethyl group-containing alkoxyhydrosilane compound. Thus obtained silane compound has improved handlability, and can be used in hydrosilylation reactions.

The use of Si-H, Si-X, and the heteromethyl group of the halohydrosilane (A) may be carried out in any order.

(II) Heteromethyl Group-Containing Alkoxyhydrosilane

Next, a method for producing (E) an alkoxyhydrosilane compound represented by the general formula (5):

$$H\text{-}SiR^2_c(CR^1_{3-b}Y_b)_a(OR^{12})_{3-a-c} \qquad (5)$$

(wherein, $R^1$, $R^2$, Y, a, b and c are as defined above; and $R^{12}$ each independently represents a substituted or unsubstituted hydrocarbon group having 1 to 20 carbon atoms) using the halohydrosilane (A) is explained.

Generally, for alkoxidization of halosilane, a halosilane is allowed to react with an alcohol. This reaction generates in addition to alkoxysilane a by-product, an acid HX. When an Si-H bond is included as in the halohydrosilane (A), the by-product HX contaminates into the yielded alkoxysilane. Thus, removal of the by-product is difficult, and further the Si-H bond of the alkoxysilane may be alkoxidized due to the presence of the HX. As a method for suppressing such alkoxidization of Si-H, a method in which the reaction is carried out under a reduced pressure to remove HX; a method in which a reaction is carried out with reaction components in a steamed state to remove HX; a method in which a reaction is carried out on a membrane to remove HX; a method in which the amount of alcohol added is regulated to suppress alkoxidization of siH, and the like are exemplified. Furthermore, a method in which a by-product HX is neutralized by adding amine such as pyridine to a reaction system beforehand to prevent alkoxidization of the Si-H bond has been known. Any method may be used for producing the alkoxyhydrosilane (E); however, halohydrosilane compounds having a heteromethyl group tend to result in loss of Si-H under the reaction conditions described above since the Si-H bond is activated by an inductive effect of the heteromethyl group. Thus, it was found that a method of suppressing degradation of Si-H by allowing a neutral acid scavenger (G) to coexist to remove a by-product acid HX when the halohydrosilane (A) and the alcohol (F) are allowed to react provides the alkoxyhydrosilane (E) efficiently.

Although the alcohol (F) is not particularly limited, methanol, ethanol, 1-propanol, 2-propanol, phenol or the like is suitably used. When moisture is contaminated when the alcohol (F) is allowed to react, halohydrosilane (A) is likely to be condensed, and the yield of the intended silane compound (E) is lowered. Therefore, to use a dehydrated alcohol is preferred.

In addition, the alcohol (F) may be yielded in a reaction system using a compound which can yield an alcohol by the reaction. Specific examples include trialkyl orthocarboxylates such as trimethyl orthoformate, triethyl orthoformate, trimethyl orthoacetate and triethyl orthoacetate; trialkyl phosphites such as trimethyl phosphite, which yield methanol by a reaction with the acid or water; acetal compounds, alkyl esterified products and alkoxysilane which yield an alcohol by hydrolysis with an acid, alkali or the like. The trialkyl orthocarboxylate and the trialkyl phosphite may be used as the acid scavenger (G) described later.

The amount of the alcohol used is preferably from 1.0 to 2.0 molar equivalents, more preferably from 1.02 to 1.5 molar equivalents, and particularly preferably from 1.05 to 1.2 molar equivalents, relative to Si-X of the halohydrosilane (A). When the amount of the alcohol is small, the reaction of alkoxidization cannot sufficiently proceed. Additionally, too great amount of the alcohol leads to not only economic disadvantages, and increase of possibility of occurrence of a side reaction to alkoxidize Si-H of the yielded alkoxyhydrosilane (E). For adding an alcohol, it may be divided into aliquots, but the total amount preferably falls within the above range.

As the acid scavenger, weakly basic compounds such as pyridine and triethylamine have been generally known. However, Si-H tends to be easily decomposed even with such weak bases for the same reasons described above. Thus, a neutral compound is suitably used as the acid scavenger (G). A neutral compound may be used without particular limitation as long as it has an acid capturing capacity, but specifically, trialkyl orthocarboxylate, trialkyl phosphite, epoxy group-containing compounds, ureas and the like are exemplified.

Trialkyl orthocarboxylate is a compound represented by the general formula (9):

$$R^{14}\text{-}C(OR^{12})_3 \qquad (9)$$

(wherein, $R^{12}$ each independently represents a substituted or unsubstituted hydrocarbon group having 1 to 20 carbon atoms; and $R^{14}$ each independently represents a hydrogen atom or a substituted or unsubstituted hydrocarbon group having 1 to 20 carbon atoms), and yields alcohol ($R^{12}OH$), halogenated alkyl ($XR^{12}$), and alkyl carboxylate ($R^{14}\text{-}CO_2R^{12}$) by a reaction with the acid HX generated under the reaction conditions of the halohydrosilane (A) and the alcohol (F). Although the trialkyl orthocarboxylate is not particularly limited, trimethyl orthoformate, triethyl orthoformate, trimethyl orthoacetate, triethyl orthoacetate and the like can be suitably used. Any of by-products generated by this reaction is highly volatile and can be easily removed. It should be note that the alkoxy group ($OR^{12}$) of the trialkyl orthocarboxylate used preferably has a structure that corresponds to the alcohol (F) since high purity of the alkoxyhydrosilane (E) can be attained.

.Moreover, trialkyl orthocarboxylate yields an alcohol by the reaction with the acid as described above, and thus it can be also used as the component (F). More specifically, the alkoxyhydrosilane compound (E) can be produced by allowing the halohydrosilane (A) to react with trialkyl orthocarboxylate. This method is preferred owing to advantages in both economical and industrial aspects. Trialkyl phosphite is a compound represented by the general formula (10):

$$P(OR^{12})_3 \qquad (10)$$

(wherein, $R^{12}$ is as defined above) and yields halogenated alkyl ($XR^{12}$), and dialkyl phosphite by reacting with the acid HX generated under the reaction conditions of the halohydrosilane (B) and the alcohol (F). Although the trialkyl phosphite is not particularly limited, trimethyl phosphite, triethyl phosphite, triisopropyl phosphite, tris(2-ethylhexyl) phosphite and

the like can be suitably used. Among these, trimethyl phosphite which is industrially readily available is more preferred.

As described above, the alcohol (F) is not used for alkoxidization of the halohydrosilane (A), but the alkoxyhydrosilane (E) can be obtained by allowing only trialkyl orthocarboxylate or only trialkyl phosphite to be acted. In this step, when the alkoxidization reaction does not completely proceed, the alkoxidization can be completed by adding a slight amount of the alcohol (F) to improve the reactivity. The epoxy group-containing compound captures the acid HX generated under the reaction conditions of the halohydrosilane (A) and the alcohol (F) by permitting ring-opening addition to the epoxy ring. Although the epoxy group-containing compound is not particularly limited, for example, epoxidized unsaturated fats and oils, epoxidized unsaturated fatty acid esters, alicyclic epoxy compounds, compounds such as epichlorohydrin derivatives, and mixtures thereof and the like are exemplified, and more specifically, epoxidized soybean oils, epoxidized linseed oils, bis(2-ethylhexyl)-4,5-epoxycyclohexane-1,2-dicarboxylate (E-PS), epoxyoctyl stearate, epoxybutyl stearate and the like are exemplified. In light of safety of the adduct, it is preferred that the epoxy group-containing compound is refractory, or has a high boiling point. In light of availability and ease in handling, epoxidized soybean oils are particularly preferred.

Trialkyl orthocarboxylate is preferably used as the acid scavenger (G) since a mild reaction efficiently proceeds, and the post-treatment may be comparatively simplified. In particular, trimethyl orthoformate, triethyl orthoformate, trimethyl orthoacetate, or triethyl orthoacetate is preferably used.

The amount of the acid scavenger (G) is not particularly limited, and may be not less than 1 molar equivalent relative to the acid HX generated in the production step of the alkoxyhydrosilane (E). In other words, the amount of at least an equimolar of the substituent X in the halohydrosilane (A) is acceptable. Specifically, the amount of the acid scavenger (G) is more preferably from 1 to 5 molar equivalents, and particularly preferably from 1 to 2 molar equivalents relative to the substituent X of the halohydrosilane (A). When the amount of the acid scavenger (G) is below this range, sufficient capture of the acid HX fails, and the reaction may not proceed, or the alkoxyhydrosilane compound may be degraded by remaining HX. The amount of the acid scavenger being beyond this range may cause unpreferable side reaction may occur, or may result in economical disadvantage.

In the method for producing a silane compound, a solvent may be used. The reaction can be controlled by using a solvent. Although the solvent which may be used is not particularly limited, aliphatic hydrocarbons, aromatic hydrocarbons, alicyclic hydrocarbons, halogenated hydrocarbons, alcohols, esters, ketones, ethers, and the like are exemplified.

Although the reaction temperature in the method for producing the silane compound (E) is not particularly specified, the temperature falls within the range of preferably from -78°C to 110°C, more preferably from -20°C to 70°C, and particularly preferably from 0°C to 50°C. When the reaction temperature is below this range, the reaction tends to proceed slowly. Moreover, when the reaction temperature is beyond this range, Si-H of the silane compound (E) is alkoxidized, whereby the yield may be lowered although the reactivity is improved. Also, it is preferred to follow the reaction and to terminate the reaction at an appropriate reaction time, and the reaction time is preferably at least 10 min and shorter than 24 hrs, and more preferably at least 0.5 hrs and shorter than 5 hrs.

Illustrative examples of the alkoxyhydrosilane (E) obtained by the method include specifically, chloromethyldimethoxysilane ($HSi(CH_2Cl)(OCH_3)_2$), chloromethyldiethoxysilane ($HSi(CH_2Cl)(OC_2H_5)_2$), chloromethyldiisopropenoxysilane ($HSi (CH_2Cl) (OC (CH_3)=CH_2)_2$), dichloromethyldimethoxysilane ($HSi(CHCl_2)(OCH_3)_2$), trichloromethyldimethoxysilane ($HSi(CCl_3)(OCH_3)_2$), chloromethylmethoxymethylsilane ($HSi(CH_2Cl)(OCH_3)(CH_3)$), bis (chloromethyl)methoxysilane ($HSi(CHCl_2)_2(OCH_3)$), 1-chloroethyldimethoxysilane ($HSi(CH_2ClCH_3)(OCH_3)_2$), fluoromethyldimethoxysilane ($HSi(CH_2F)(OCH_3)_2$), bromomethyldimethoxysilane ($HSi (CH_2Br) (OCH_3)_2$), iodomethyldimethoxysilane ($HSi (CH_2I) (OCH_3)_2$), 1-bromobenzyldimethoxysilane ($HSi(CHBrC_6H_5) (OCH_3)_2$), methoxymethyldimethoxysilane ($HSi(CH_2OCH_3) (OCH_3)_2$), ethoxymethyldimethoxysilane ($HSi(CH_2OC_2H_5) (OCH_3)_2$), N,N-diethylaminomethyldimethoxysilane ($HSi(CH_2N(C_2H_5)_2) (OCH_3)_2$), piperidinomethyldimethoxysilane ($HSi(CH_2N(CH_2)_5) (OCH_3)_2$), mercaptomethyldimethoxysilane ($HSi(CH_2SH)(OCH_3)_2$) and the like, but not limited thereto. In light of usefulness of silane, chloromethyldimethoxysilane, chloromethyldiethoxysilane, chloromethyldiisopropenoxysilane, chloromethylmethoxymethylsilane, bis(chloromethyl)methoxysilane, 1-chloroethyldimethoxysilane and methoxymethyldimethoxysilane are preferred, and chloromethyldimethoxysilane, chloromethyldiethoxysilane and methoxymethyldimethoxysilane are more preferred.

Specific use of the alkoxyhydrosilane compound (E) is illustratively shown below, but not limited thereto. (1) The alkoxyhydrosilane compound (E) is added to an unsaturated group-containing compound by a hydrosilylation reaction, whereby a reactive silicon group-containing compound that is highly hydrolyzable is obtained. For example, chloromethyldimethoxysilane is added to allyl chloride by hydrosilylation, whereby 3-chloropropyl(chloromethyl)dimethoxysilane is obtained. This product can be used as a silane coupling agent, generally referred to, having both a hydrolyzable silicon group and other reactivity group, and as a source material of such a silane coupling agent. Since thus obtained silane coupling agent has a heteromethyl group on the silicon atom, it is believed to exhibit higher hydrolyzability. Also, the unsaturated group-containing compound may be a compound having a high molecular weight. For example, when the alkoxyhydrosilane compound (E) is used in introducing a reactive silicon group of a reactive silicon group-containing organic polymer as disclosed in JP-A No. S52-73998 and the like, a reactive silicon group-containing organic

polymer having very high reactivity and favorable handlability can be obtained. (2) After a hydrolyzable silicon group-containing compound obtained in a similar manner to (1) is converted into a siloxane compound by a hydrolysis and condensation reaction, a halomethyl group may be also converted into a desired substituent by a nucleophilic substitution reaction or the like (e.g., a chloromethyl group can be converted into a diethylaminomethyl group).

The use of Si-H, Si-$OR^2$, and the heteromethyl group of the alkoxyhydrosilane compound (E) may be carried out in any order.

(III) Heteromethyl Group-Substituted Reactive Silyl Group-Containing Polymer

Of the exemplary use of the halohydrosilane (A) and the alkoxyhydrosilane (E) described above, the reactive silicon group-containing polymer is explained in detail below.

The reactive silicon group-containing polymer (H) obtained using the halohydrosilane (A) or the alkoxyhydrosilane (E) has at least one group represented by the general formula (6):

$$-CHR^{13}CR^{13}{}_2\text{-}SiR^2{}_c\,(CR^1{}_{3-b}Y_b)_aZ_{3-a-c} \qquad (6)$$

(wherein, $R^1$, $R^2$, Y, a, b and c are as defined above; $R^{13}$ each independently represents a hydrogen atom, or a substituted or unsubstituted hydrocarbon group having 1 to 20 carbon atoms; and Z each independently represents a hydroxyl group or a hydrolyzable group) on average per molecule. This group is one of reactive silicon groups, generally referred to, that form a siloxane bond by a silanol condensation catalyst. This permits the polymer (H) to have a characteristic feature of being crosslinked and cured with moisture. As represented by the general formula (1), the polymer (H) has a characteristic feature of having a heteromethyl group on the silyl group. Hereinafter, this silyl group may be referred to as "heteromethyl type reactive silicon group". Due to having a heteromethyl type reactive silicon group, the polymer (H) exhibits faster curability as compared with polymers having a reactive silicon group having an unsubstituted hydrocarbon group such as a methyl group (e.g., dimethoxymethylsilyl group, etc.).

Moreover, since the heteromethyl type reactive silicon group is linked to the polymer main chain via a carbon-silicon bond in the polymer (H), the cured product obtained from the polymer (H) is expected to exhibit a feature of being more resistant to deterioration as compared with cured products obtained from a reactive silicon group-containing polymer in which the group is linked to the main chain via an oxygen-silicon bond as disclosed in WO 2008/053875.

Z in the general formula (6) represents a hydrolyzable group or a hydroxyl group. The hydrolyzable group is not particularly limited and well-known groups are exemplified, and examples include the halogen atoms represented by X in the general formula (1); a hydrogen atom, alkoxy groups, aryloxy groups, alkenyloxy groups, acyloxy groups, ketoxymate groups, amino groups, amide groups, acid amide groups, aminooxy groups, mercapto groups, and the like. Of these, halogen atoms, alkoxy groups, alkenyloxy groups, and aryloxy groups are preferred due to having a high activity. A chlorine atom, and alkoxy groups are preferred since they cay be easily introduced. Due to mild hydrolyzability and favorable handlability, alkoxy groups such as a methoxy group and an ethoxy group are more preferred, and a methoxy group and an ethoxy group are particularly preferred. Furthermore, an ethoxy group and an isopropenoxy group are preferred in terms of safety since the compounds eliminated by the reaction are ethanol and acetone, respectively. The number of the substituent Z is 1 or 2. Since fast curability is likely to be achieved, and the resulting cured product exhibits favorable rubber elasticity, two hydrolyzable groups or two hydroxyl groups are preferably included. The hydrolyzable group other than halogen atoms as illustrated herein can be introduced by substituting with a halogen atom. Conversion from this halogen atom into other hydrolyzable group may be executed by converting X of the halohydrosilane (A) beforehand, or by converting after hydrosilylation of the halohydrosilane (A) to the polymer.

Illustrative examples of the specific structure of the heteromethyl type reactive silicon group of the polymer (H) of the present invention include a chloromethylmethoxymethylsilyl group, a bis(chloromethyl)methoxysilyl group, a bis(chloromethyl)ethoxysilyl group, a chloromethyldichlorosilyl group, a chloromethyldimethoxysilyl group, a chloromethyldiethoxysilyl group, a chloromethyldiisopropenoxysilyl group, a dichloromethyldimethoxysilyl group, a 1-chloroethyldimethoxysilyl group, a 1-bromobenzyldimethoxysilyl group, a methoxymethyldimethoxysilyl group, a methoxymethyldiethoxysilyl group, an ethoxymethyldiethoxysilyl group, an aminomethyldimethoxysilyl group, a dimethylaminomethyldimethoxysilyl group, a diethylaminomethyldimethoxysilyl group, a diethylaminomethyldiethoxysilyl group, a N-(2-aminoethyl)aminomethyldimethoxysilyl group, an acetoxymethyldimethoxysilyl group, an acetoxymethyldiethoxysilyl group and the like, but not limited thereto. Among these, a chloromethyldimethoxysilyl group, a chloromethyldiethoxysilyl group, a methoxymethyldimethoxysilyl group, a methoxymethyldiethoxysilyl group and a diethylaminomethyldiethoxysilyl group are preferred due to high activity, and a chloromethyldimethoxysilyl group and a diethylaminomethyldimethoxysilyl group are particularly preferred. In addition, a chloromethyldimethoxysilyl group and a methoxymethyldimethoxysilyl group are still more preferred due to ease in introduction.

Among the reactive silicon group-containing polymers, reactive silicon groups having only one hydrolyzable group have low reactivity, in general. For example, even if an effort is made to allow a polymer having a methoxydimethyl

silyl group to react by way of an organic tin-based silanol condensation catalyst, the reaction scarcely proceeds, and thus increase in the molecular weight is not effected. To the contrary, since the silicon group of the polymer (H) of the present invention is activated by the heteromethyl group, for example, the reaction can be expected to proceed even if only one hydrolyzable group such as a chloromethylmethoxymethylsilyl group is present.

As the substituent $R^{13}$ in the general formula (6), a hydrogen atom, a methyl group, an ethyl group, and a phenyl group are exemplified, but not particularly limited thereto. Since the effect on the activity of the reactive silicon group due to steric hindrance is small, $R^{13}$ is preferably a hydrogen atom.

In addition, although the polymer (H) has a heteromethyl type reactive silicon group as an essential component, a reactive silicon group such as those represented by the general formula (14) described later may be included coincidentally.

The main chain skeleton of the polymer (H) is not particularly limited and those having various types of main chain skeleton may be used. For example, organic polymers such as polyoxyalkylene-based polymers such as polyoxyethylene, polyoxypropylene, polyoxybutylene, polyoxytetramethylene, polyoxyethylene-polyoxypropylene copolymers and polyoxypropylene-polyoxybutylene copolymers; hydrocarbon-based polymers such as ethylene-propylene-based copolymers, polyisobutylene, copolymers of isobutylene and isoprene or the like, polychloroprene, polyisoprene, copolymers of isoprene or butadiene and acrylonitrile and/or styrene or the like, polybutadiene and copolymers of isoprene or butadiene and acrylonitrile and styrene or the like, and hydrogenated polyolefin polymers derived from these polyolefin-based polymers by hydrogenation; polyester-based polymers obtained by condensation of a dibasic acid such as adipic acid and a glycol, or ring-opening polymerization of a lactone(s); (meth)acrylic ester-based polymers obtained by radical polymerization of such a monomer as ethyl (meth)acrylate or butyl (meth)acrylate; vinyl-based polymers obtained by radical polymerization of such a monomer as a (meth)acrylic ester-based monomer, vinyl acetate, acrylonitrile or styrene; graft polymers obtained by polymerizing a vinyl monomer in such polymers as described above; polysulfide-based polymers; polyamide-based polymers such as polyamide 6 produced by ring-opening polymerization of ε-caprolactam, polyamide 6,6 produced by polycondensation of hexamethylenediamine and adipic acid, polyamide 6,10 produced by polycondensation of hexamethylenediamine and sebacic acid, polyamide 11 produced by polycondensation of ε-aminoundecanoic acid, polyamide 12 produced by ring-opening polymerization of ε-amnolaurolactam, and copolymer polyamides having at least two components among the polyamides described above; polycarbonate-based polymers produced by polycondensation of bisphenol A and carbonyl chloride, and diallyl phthalate-based polymers are exemplified. Alternatively, polysiloxane-based polymers such as polydiorganosiloxane may be also used. Of these, saturated hydrocarbon-based polymers such as polyisobutylene, hydrogenated polyisoprene and hydrogenated polybutadiene, polyoxyalkylene-based polymers, (meth)acrylic ester-based polymers and polysiloxane-based polymers are preferred in view of their relatively low glass transition temperature and of favorable low-temperature resistance of cured products obtained when used as a curable composition. It should be noted that in the foregoing expressions, for example, (meth)acrylate herein referred to means acrylate and/or methacrylate.

The polymer (H) may have either a straight or branched chain, and the number average molecular weight is 3,000 to 100,000, more preferably 3,000 to 50,000, and particularly preferably 3,000 to 30,000 in terms of the value on a polystyrene equivalent basis as derived from measurement with GPC. The number average molecular weight being less than 3,000 tends to result in disadvantages in regard to elongation characteristics of the cured product, whereas the number average molecular weight exceeding 100,000 tends to result in disadvantages in regard to workability due to increase in viscosity.

The molecular weight distribution of the polymer (H) is not particularly limited, but narrow distribution is preferred. The molecular weight distribution is preferably less than 2.00, more preferably not greater than 1.60, and particularly preferably not greater than 1.40. Too great molecular weight distribution leads to increase in viscosity, and thus the workability is likely to be deteriorated.

Although the glass transition temperature of the polymer (H) is not particularly limited, it is preferably not higher than 20°C, more preferably not higher than 0°C, and particularly preferably not higher than -20°C. When the glass transition temperature is higher than 20°C, the viscosity increases in the winter season or in cold districts leading to probability of inferior handlability, and also the flexibility of the cured product decreases and the elongation thereof can be decreased. The glass transition temperature may be determined by DSC measurement according to the method prescribed in JIS K 7121.

Organic polymers such as saturated hydrocarbon-based polymers, polyoxyalkylene-based polymers and (meth)acrylic ester-based polymers are preferred since when used as a base polymer of a sealing material or an adhesive, contamination resulting from transfer or the like of a low-molecular weight component to the adhesion substrate is less likely to occur.

In addition, polyoxyalkylene-based polymers and (meth)acrylic ester-based polymers are preferred due to high moisture permeability as well as superior depth curability when used in a one-pack type composition, and further also superior in adhesion properties. Polyoxyalkylene-based polymers are particularly preferred.

The method for introducing a reactive silicon group is not particularly limited, and a well-known method may

be employed. For example, the following methods may be involved.

1) A method for hydrosilylation by allowing (L) a hydrosilane compound represented by the general formula (11) :

$$H\text{-}SiR^2_c(CR^1_{3-b}Y_b)_aZ_{3-a-c} \qquad (11)$$

(wherein, $R^1$, $R^2$, Z, Y, a, b and c are as defined above) to act on (I) a polymer having an unsaturated group represented by the general formula (7):

$$-CR^{13}=CR^{13}_2 \qquad (7)$$

(wherein, $R^{13}$ is as defined above) in the molecule.
2) A method of allowing the polymer (I) to react with a compound having a mercapto group and a heteromethyl type reactive silicon group.
3) A method of allowing a polymer having a functional group such as a hydroxyl group, an epoxy group or an isocyanate group in the molecule to react with a compound having a functional group reactive to the above functional group, and a heteromethyl type reactive silicon group.

Among the aforementioned methods, the method 1) is preferred since the reaction proceeds with high efficiency and with a small number of steps, leading to advantageous in industrialization.

Specific examples of the hydrosilane compound (L) used in the method of 1) include the halohydrosilane (A) and the alkoxyhydrosilane (E) described above, but not limited thereto. Among these, chloromethyldichlorosilane, chloromethyldimethoxysilane, chloromethyldiethoxysilane and methoxymethyldimethoxysilane are more preferred in light of availability, and chloromethyldichlorosilane is particularly preferred. Since the reaction is less likely to be accompanied by a side reaction, alkoxysilane such as chloromethyldimethoxysilane, chloromethyldiethoxysilane and methoxymethyldimethoxysilane is more preferred.

The amount of the halohydrosilane (A) and/or the alkoxyhydrosilane (E) in terms of the molar ratio to the unsaturated group in the polymer (I), i.e., (number of moles of the hydrosilane)/ number of moles of the unsaturated group) is preferably from 0.05 to 10 in light of the reactivity, and more preferably from 0.3 to 2 in light of the economical efficiency.

The hydrosilylation reaction in the method of 1) is accelerated by various types of catalyst. As the hydrosilylation catalyst, a well-known catalyst such as a variety of types of complexes of cobalt, nickel, iridium, platinum, palladium, rhodium, ruthenium or the like may be used. For example, carriers such as alumina, silica and carbon black supporting platinum, as well as chloroplatinic acid, chloroplatinic acid complexes, platinum-olefin complexes, platinum-vinylsiloxane complexes, platinum-phosphine complexes, platinum-phosphite complexes, and the like may be used. In light of the reaction efficiency, a platinum catalyst such as chloroplatinic acid or a platinum-vinylsiloxane complex is preferably used. Furthermore, the temperature condition of the silylation reaction is not particularly limited; however, for the purpose of lowering of the viscosity of the reaction system, and improving the reactivity, the reaction is preferably carried out under a heating condition. The reaction is carried out more preferably in the temperature range of 50°C to 150°C, and particularly preferably 70°C to 120°C. In addition, since excessively long reaction time period may result in deterioration of the polymer main chain, it is preferred to adjust the reaction time in addition to the temperature. The temperature and the reaction time may depend of the main chain structure of the polymer (I) to be produced, the reaction is terminated preferably within 5 hrs, and more preferably within 3 hrs in light of enhancement of efficiency of the production steps.

Additionally, the heteromethyl group on the silicon atom of the polymer (H) of the present invention may be converted to other heteromethyl group by a substitution reaction. In particular, halomethyl groups such as a chloromethyl group are preferred since they can be readily substituted.

Although the polymer (H) exhibits a high activity, the viscosity is likely to be elevated due to this feature, and to control the storage stability tends to be difficult. For example, when the polymer (H) is stored for a long period of time after production, the viscosity may be elevated.

Thus, in the method for producing the polymer (H), the storage stability of the polymer (H) may be improved by using trialkyl orthocarboxylate and/or trialkyl phosphite in carrying out hydrosilylation. Polymers having a reactive silicon group such as a methyldimethoxysilyl group exhibit favorable storage stability even if trialkyl orthocarboxylate or trialkyl phosphite is not used in hydrosilylation; however, when the polymer (H) obtained by hydrosilylation without using trialkyl orthocarboxylate or trialkyl phosphite is stored for a long period of time, significant elevation of viscosity may be observed as compared with polymers having a methyldimethoxysilyl group. In order to suppress such elevation of the viscosity, it is necessary to perform through control of the moisture during production of the polyoxyalkylene-based polymer having a heteromethyl type reactive silicon group, as well as during transfer of the product from the reaction vessel to the storage vessel, and also during the storage by conducting the operation in a glove box maintained to

provide a dehydrated condition, and the like. On the other hand, the polymer (H) obtained using trialkyl orthocarboxylate and/or trialkyl phosphite in silylation exhibits superior storage stability without elevation of the viscosity after the storage even by usual production and storage operations without performing the control of the moisture beyond necessity.

The amount of trialkyl orthocarboxylate and/or trialkyl phosphite used in silylation for improving the storage stability of the polymer (H) is 0.1 to 50 parts by weight, and preferably 0.1 to 30 parts by weight relative to 100 parts by weight of the polymer (I) having an unsaturated group. When the amount is small, the effects of the invention are not achieved sufficiently, and elevation of the viscosity may occur during storage. In addition, too large amount is economically disadvantageous, and quantity of work increases for the elimination step.

The polyoxyalkylene-based polymer is a polymer having a repeating unit essentially represented by the general formula (12):

$$-R^{15}-O- \qquad (12)$$

(wherein, $R^{15}$ represents a linear or branched alkylene group having 1 to 14 carbon atoms), and $R^{15}$ is more preferably a linear or branched alkylene group having 2 to 4 carbon atoms. The repeating unit recited in the general formula (12) is not particularly limited, and examples thereof include:

[Chemical formula 1]

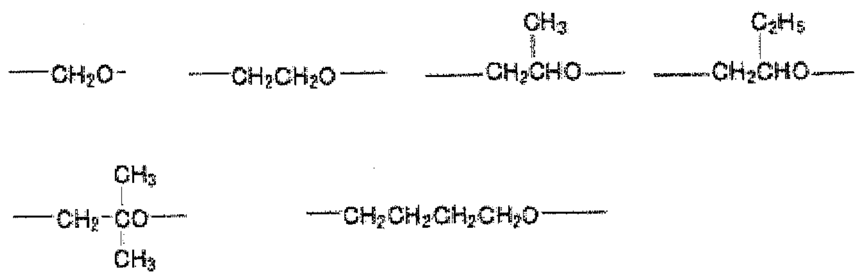

**[0090]** , and the like. The main chain skeleton of the polyoxyalkylene-based polymer may be composed of either only one type of the repeating unit, or two or more types of the repeating units. In particular, when used for sealing materials and the like, those constituted with a polymer in which a propylene oxide polymer is a principal component are preferred since they are amorphous and have comparatively low viscosity.

The method for synthesizing the polyoxyalkylene-based polymer is not particularly limited, and for example, a polymerization method in which an alkali catalyst such as KOH is used; a polymerization method disclosed in JP-A No. S61-215623 in which a transition metal compound-porphyrin complex catalyst is used, such as a complex obtained by allowing an organic aluminum compound to react with porphyrin; polymerization methods disclosed in each publication of JP-B Nos. S46-27250 and S59-15336, U.S. Patent Nos. 3,278,457, 3,278,458, 3,278,459, 3,427,256, 3,427,334 and 3,427,335, etc., in which a composite metal cyanide complex catalyst is used; a polymerization method disclosed in JP-A No. H10-273512 in which a catalyst constituted with a polyphosphazene salt is used; a polymerization method disclosed in JP-A No. HII-060722 in which a catalyst constituted with a phosphazene compound is used, and the like are exemplified.

The saturated hydrocarbon-based polymer described above is a polymer not substantially containing a carbon-carbon unsaturated bond other than an aromatic ring, and the polymer that serves as a skeleton may be obtained by: (1) a method of polymerizing an olefin-based compound having 2 to 6 carbon atoms such as ethylene, propylene, 1-butene or isobutylene as a main monomer; (2) a method in which a diene-based compound such as butadiene or isoprene is homopolymerized or copolymerized with the aforementioned olefin-based compound, followed by hydrogenation; or the like. Of these, isobutylene-based polymers and hydrogenated polybutadiene-based polymers are preferred in view of ease of introduction of a functional group into the terminus thereof, ease of molecular weight control, capability of increasing the number of terminal functional groups, and the like. In particular, isobutylene-based polymers are more preferred.

Polymers including a saturated hydrocarbon as a main chain skeleton have characteristic features of superior heat resistance, weather resistance, durability, and moisture barrier properties.

The isobutylene-based polymer may be formed from an isobutylene unit as all the repeating units, or may be a copolymer with other repeating unit (monomer), but in view of the rubber characteristics, it has repeating units derived from isobutylene at a rate of preferably not less than 50% by weight, more preferably not less than 80% by weight, and particularly preferably 90 to 99% by weight.

The method for synthesizing the saturated hydrocarbon-based polymer is not particularly limited, and various

types of polymerization methods reported so far are exemplified. In particular, a living polymerization method on which many reports have been made recently is preferred. Of these, in the case of saturated hydrocarbon-based polymers, particularly isobutylene-based polymers, Inifer polymerization found by Kennedy, *et al*. (J. P. Kennedy, et al., J. polymer Sci., Polymer Chem. Ed. 1977, vol. 15, pages 2869-2892) may be employed to enable easy production, and it has been known that polymerization to give a molecular weight of about 500 to 100, 000, with a molecular weight distribution of not greater than 1.5 is enabled and various types of functional groups can be introduced at the molecule terminal.

Although the (meth) acrylic ester-based monomer that constitutes the main chain of the aforementioned (meth) acrylic ester-based polymer is not particularly limited, any well-known monomer may be used, and for example, (meth) acrylic ester-based monomers such as (meth)acrylic acid, methyl (meth)acrylate, isopropyl (meth)acrylate, n-butyl (meth)acrylate, tert-butyl (meth)acrylate, n-hexyl (meth)acrylate, 2-ethylhexyl (meth)acrylate, phenyl (meth)acrylate, 2-methoxyethyl (meth)acrylate, 2-hydroxyethyl (meth)acrylate, stearyl (meth)acrylate, glycidyl (meth)acrylate, γ-(methacryloyloxypropyl)trimethoxysilane, γ-(methacryloyloxypropyl)dimethoxymethylsilane, ethylene oxide adducts of (meth)acrylic acid, 2-trifluoromethylethyl (meth)acrylate and 2-perfluoroethylethyl (meth)acrylate are exemplified, which may be used alone or a plurality of which may be used after copolymerization.

As the (meth)acrylic ester-based polymer, a polymer obtained by copolymerization of a (meth) acrylic ester-based monomer, and a vinyl-based monomer that is copolymerizable therewith may be also used. The vinyl-based monomer is not particularly limited, and for example, styrene-based monomers such as styrene, α-methylstyrene, chlorstyrene, styrenesulfonic acid and salts thereof; fluorine-containing vinyl-based monomers such as perfluoroethylene, perfluoropropylene, and vinylidenefluoride; silicon-containing vinyl-based monomers such as vinyltrimethoxysilane, and vinyltriethoxysilane; maleic anhydride, and maleic acid, and monoalkyl esters and dialkyl esters of maleic acid; fumaric acid, monoalkyl esters and dialkyl esters of fumaric acid; maleimide-based monomers such as maleimide, butylmaleimide, and phenylmaleimide; nitrile group-containing vinyl-based monomers such as acrylonitrile, and methacrylonitrile; amide group-containing vinyl-based monomers such as acrylamide, and methacrylamide; vinyl ester-based monomers such as vinyl acetate; alkenyl-based monomers such as ethylene, and propylene; conjugated diene-based monomers such as butadiene, and isoprene; vinyl chloride, vinylidene chloride, allyl chloride, allyl alcohol, and the like are exemplified. A plurality of these may be used as copolymerization components.

Among the (meth)acrylic ester-based polymers obtained from the monomers, copolymers which include a styrene-based monomer and a (meth)acrylic acid-based monomer are preferred since they give cured products excellent in physical properties; (meth)acrylic ester-based polymers which include an acrylic acid ester monomer and a methacrylic acid ester monomer are more preferred; and acrylic acid ester-based polymers which include an acrylic ester-based monomer are particularly preferred.

In particular, when the polymer (H) is used for applications in general architectures and the like, butyl acrylate-based polymers formed from a butyl acrylate-based monomer are preferred since physical properties such as low viscosity of the blended matter, low modulus of cured products, superior elongation, weather resistance, and heat resistance are demanded. In addition, when used in applications for which oil resistance is demanded such as applications for automobiles, copolymers constituted with ethyl acrylate as a principal component are preferred. Although polymers constituted with ethyl acrylate are superior in oil resistance, there is a possibility of being somewhat inferior in low-temperature characteristics (low-temperature resistance); therefore, a part of ethyl acrylate may be replaced with butyl acrylate in order to improve the low-temperature characteristics. However, since an increased proportion of butyl acrylate tends to impair the favorable oil resistance; therefore, the proportion is preferably not greater than 40%, and still more preferably not greater than 30% in applications for which oil resistance is demanded. Additionally, in order to improve low-temperature characteristics and the like without impairing the oil resistance, it is also preferable to use 2-methoxyethyl acrylate, 2-ethoxyethyl acrylate, or the like which has an oxygen atom introduced into the side chain alkyl group.

Since, however, the introduction of an alkoxy group having an ether bond in the side chain tends to result in inferior heat resistance, the proportion thereof is preferably not greater than 40% when heat resistance is needed. It is possible to obtain a suitable polymer to meet various types of use and required objects by changing the proportion thereof, taking into consideration required physical properties such as oil resistance, heat resistance, low-temperature characteristics, etc. For example, copolymers of ethyl acrylate/ butyl acrylate/ 2-methoxyethyl acrylate (weight ratio: 40 to 50/20 to 30/30 to 20) are included as examples but not limited thereto that are superior in the balance of physical properties such as oil resistance, heat resistance and low-temperature characteristics. In the present invention, these preferred monomers may be copolymerized with other monomer, or further may be block copolymerized. In such instances, these preferred monomers are preferably contained not less than 40% by weight.

The method for synthesizing the (meth)acrylic ester-based polymer is not particularly limited, and any well-known method may be exemplified. However, polymers obtained by common free radical polymerization in which an azo-based compound, peroxide or the like is used as a polymerization initiator have problems of a molecular weight distribution value being generally as great as not less than 2, and thus having an increased level of viscosity. Therefore, in order to obtain a (meth)acrylic ester-based polymer having a narrow molecular weight distribution and low viscosity, and also having a crosslinkable functional group at the molecule chain terminal at a high ratio, a living radical polymerization method is preferably used.

Of the "living radical polymerization methods", an "atom transfer radical polymerization method" in which a (meth)acrylic ester-based monomer is polymerized using an organic halide or a halogenated sulfonylated compound as an initiator, and a transition metal complex as a catalyst is more preferred as a method for producing a (meth)acrylic ester-based polymer having a specific functional group due to having in addition to the characteristic feature of the "living radical polymerization method", having a halogen atom, which is comparatively advantageous in functional group exchange reactions, at the terminal, thereby having a high degree of freedom in selecting the initiator and catalyst. As this atom transfer radical polymerization method, for example, Matyjaszewski, et al., Journal of the American Chemical Society (J. Am. Chem. Soc.) 1995, vol. 117, page 5614, and the like may be exemplified.

The polymer (H) composed of any of these various types of the main chain skeleton may be used alone, or two or more having different main chain skeletons may be used in combination.

On the other hand, the main chain skeleton of the polymer (H) may include other component such as a urethane linking component within a range not to significantly impair the effects of the present invention.

Although the urethane linking component is not particularly limited, groups (hereinafter, may be also referred to as amide segment) yielded by a reaction of an isocyanate group with an active hydrogen group may be exemplified.

The amide segment is a group represented by the general formula (13):

$$-NR^{16}(C{=}O)- \qquad (13)$$

(wherein $R^{16}$ represents a hydrogen atom or a substituted or unsubstituted organic group).

Although the amide segment represented by the general formula (10) is not particularly limited, for example, functional groups having an amide bond such as urethane groups yielded by a reaction of an isocyanate group with a hydroxyl group; urea groups yielded by a reaction of an isocyanate group with an amino group; thiourethane groups yielded by a reaction of an isocyanate group with a mercapto group, etc., and groups yielded by a further reaction of the active hydrogen in the urethane group, the urea group, or the thiourethane group described above with an isocyanate group are exemplified.

In cured products obtained by curing a curable composition constituted with a polymer containing a urethane bond or an ester bond as a main chain, the main chain may be cleaved at the urethane bond or the ester bond moiety due to heat or the like, whereby the strength of the cured product may be significantly reduced.

When a large number of amide segments are included in the main chain skeleton of the polymer (H) of the present invention, the viscosity of the polymer tends to increase. In addition, there are cases in which the viscosity increases after storage, and thus the workability of the obtained composition may be deteriorated. Moreover, as described above, it is possible that the amide segment is cleaved due to heat, or the like. Therefore, in order to obtain a composition that is superior in storage stability and/or workability, it is preferred that an amide segment is not substantially included. On the other hand, curability tends to be improved by the amide segment in the main chain skeleton of the polymer (H). Therefore, when the amide segment is included in the main chain skeleton of the polymer (H), the number of the amide segment is preferably 1 to 10, more preferably 1.5 to 5, and particularly preferably 2 to 3 on average per molecule. When the number is less than 1, the curability may be insufficient, whereas when the number is greater than 10, the polymer may have high viscosity, whereby the handling may be difficult.

Hereinafter, the curable composition in which the polymer (H) of the present invention is used is described in detail.

In the curable composition of the present invention, the polymer (H) is essential as a moisture-curable polymer component, and as needed (M) a polymer having a reactive silicon group represented by the general formula (14):

$$-SiR^{17}_{3-e}Z_e \qquad (14)$$

(wherein, Z is as defined above; $R^{17}$ each independently represents either a hydrocarbon group having 1 to 20 carbon atoms, or an organosiloxy group represented by $R^{18}_3SiO$- (wherein $R^{18}$ each independently represents a hydrocarbon group having 1 to 20 carbon atoms); and e is any one of 1, 2 and 3) in the number of at least one on average per molecule may be included, in addition to the polymer (H).

The reactive silicon group represented by the general formula (14) is not particularly limited, and for example, a trimethoxysilyl group, a triethoxysilyl group, a triisopropoxysilyl group, a triisopropenoxy group, a dimethoxymethylsilyl group, a diethoxymethylsilyl group, a diisopropoxymethylsilyl group, a methoxydimethyl silyl group, and an ethoxydimethyl silyl group are exemplified. The reactive silicon group included in the polymer (M) may be all the same, or two or more may exist as mixed.

The main chain skeleton and the method for the synthesis of the polymer (M) may be explained similarly to the polymer (H) described above, and more specifically, see the paragraph of the polymer (A) in WO 2006/051799.

The polymer (H) and the polymer (M) may be used by mixing at an arbitrary ratio, and the mixing ratio may be

selected in view of the curing speed, the stability, the cost and the like. The main chain skeleton of the polymer (H) and the polymer (M) may be the same or different, but it is preferred that these polymers are miscible with each other.

The curable composition of the present invention has a silanol condensation catalyst (J) as a constitutive component. The silanol condensation catalyst (J) plays a role in promoting a reaction of hydrolyzing and condensing the reactive silicon groups of the polymer (H) and the polymer (M) to permit crosslinking, and as a result a cured product is provided. Hereinafter, the silanol condensation catalyst (J) may be also referred to as a curing catalyst (J).

Although the silanol condensation catalyst (J) is not particularly limited, a well-known catalyst may be included, and for example, organic tin compounds, carboxylic acid metal salts, amine-based compounds, carboxylic acids, alkoxy metals, inorganic acid and the like are exemplified. However, since organic tin compounds are concerned about influences on environment as described above, the curing catalyst preferably does not substantially contain an organic tin-based catalyst, and it is preferable to use a nonorganic tin-based compound. In particular, (J1) an amine-based compound is preferred since the polymer (H) can be cured in an extremely short time although it is a nonorganic tin-based catalyst.

Although the amine-based compound (J1) is not particularly limited, for example, aliphatic primary amines such as propylamine, isopropylamine, butylamine, hexylamine, octylamine, 2-ethylhexylamine, laurylamine, stearylamine, and cyclohexylamine; aliphatic secondary amines such as diethylamine, diisopropylamine, dibutylamine, and dihexylamine; aliphatic tertiary amines such as triethylamine, tributylamine, and trioctylamine; aliphatic unsaturated amines such as allylamine, and oleylamine; aromatic amines such as aniline, and triphenylamine; nitrogen-containing heterocyclic compounds such as pyridine, 2-aminopyridine, 2-(dimethylamino)pyridine, 4-(dimethylaminopyridine), 2-hydroxypyridine, imidazole, N-methylmorpholine, piperidine, 1,2-dimethyl-1,4,5,6-tetrahydropyrimidine , 1,8-diazabicyclo(5,4,0)undecene-7 (DBU), 6-(dibutylamino)-1,8-diazabicyclo(5,4,0)undecene-7 (DBA-DBU), 1,5-diazabicyclo(4,3,0)nonene-5 (DBN), 1,4-diazabicyclo(2,2,2)octane (DABCO) and aziridine, and as other amines thereof, amines such as ethanolamine, diethanolamine, triethanolamine, 3-hydroxypropylamine, ethylenediamine, propylenediamine, hexamethylenediamine, N-methyl-1,3-propanediamine, N,N'-dimethyl-1,3-propanediamine, diethylenetriamine, triethylenetetramine, 2-(2-aminoethylamino)ethanol, benzylamine, 3-methoxypropylamine, 3-lauryloxypropylamine, 3-dimethylaminopropylamine, 3-diethylaminopropylamine, 3-morpholinopropylamine and 2-(1-piperazinyl)ethylamine; guanidines such as guanidine, phenylguanidine, and diphenylguanidine; biguanides such as butylbiguanide, 1-o-tolylbiguanide and 1-phenylbiguanide, and the like are exemplified.

Among these, amidine compounds represented by the general formula (15):

$$R^{19}N{=}CR^{19} - NR^{19}_2 \qquad (15)$$

(wherein, $R^{19}$ each independently represents a hydrogen atom or a substituted or unsubstituted hydrocarbon group having 1 to 20 carbon atoms; and each $R^{19}$ may be linked) are preferred due to having a particularly high catalytic activity. Specifically, 1,2-dimethyl-1,4,5,6-tetrahydropyrimidine, DBU, DBA-DBU, DBN and the like may be included, but not limited thereto. In light of superior availability and ease in handling, DBU and DBN are more preferred.

In addition, guanidine compounds represented by the general formula (16):

$$R^{20}N{=}C(NR^{20}_2)_2 \qquad (16)$$

(wherein, $R^{20}$ each independently represents a hydrogen atom or a substituted or unsubstituted hydrocarbon group having 1 to 20 0 carbon atoms; and each $R^{20}$ may be linked) are also preferred due to having a high catalytic activity. Specifically, guanidine, phenylguanidine, 1-tolylguanidine, diphenyl guanidine and the like are exemplified, but not limited thereto. In particular, phenylguanidine and tolylguanidine in which one of $R^{20}$ is an aryl group is preferable since a composition having a high activity, and further also having favorable adhesion properties is likely to be provided.

Moreover, biguanide compounds represented by the general formula (17) :

[Chemical formula 2]

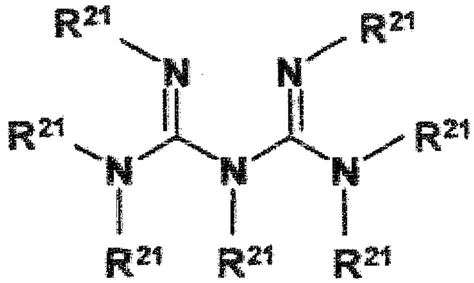

(17)

(wherein, $R^{21}$ each independently represents a hydrogen atom or a substituted or unsubstituted hydrocarbon group having 1 to 20 carbon atoms; and each $R^{21}$ may be linked) are also preferred due to having a high catalytic activity. Specifically, butylbiguanide, 1-o-tolylbiguanide, 1-phenylbiguanide and the like are exemplified, but not limited thereto. In particular, 1-o-tolylbiguanide is preferred due to also having favorable in availability, and further not being accompanied by bleeding and deposited matter, etc., on the surface of the cured product.

It should be noted that taking into consideration ease in handling and safety, to use alkylamine having 5 to 20 carbon atoms is preferred, and alkylamine having 6 to 15 carbon atoms is more preferred. When the number of carbon atoms is smaller than 5, volatility increases, and thus the odor tends to be enhanced. When the carbon atom is larger than 15, a solid state is more likely to be provided at room temperatures, and thus an effective action as a catalyst may fail to be achieved. In addition, octylamine, 2-ethylhexylamine, laurylamine, and 3-diethylaminopropylamine are preferred due to favorable availability.

In the present invention, an amino group-containing silane coupling agent (hereinafter, may be also referred to as aminosilane) can be also used which is to be used in the curing catalyst (J) as an amine-based compound. An aminosilane is a compound having a hydrolyzable silicon group and, a substituted or unsubstituted amino group. Although the substituent in the substituted amino group is not particularly limited, for example, an alkyl group, an aralkyl group, an aryl group and the like are exemplified. Furthermore, although the hydrolyzable silicon group is not particularly limited, hydrolyzable silicon groups shown in the section of the polymer (H) or (M) may be exemplified. Among these, a silicon group having an alkoxy group such as a methoxy group or an ethoxy group as a hydrolyzable group is preferable due to mild hydrolyzability and ease in handling. The number of hydrolyzable groups bound to the silicon atom in the aminosilane is preferably 2 or more, and particularly preferably 3 or more. The compound is not particularly limited, and for example, γ-aminopropyltrimethoxysilane, γ-aminopropyltriethoxysilane, γ-aminopropylmethyldimethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-(2-aminoethyl)aminoethyl)aminopropyltrimethoxysilane, 3-(N-ethylamino)-2-methylpropyltrimethoxysilane, γ-ureidepropyltrimethoxysilane, N-phenyl-γ-aminopropyltrimethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, and the like are exemplified.

Among the aforementioned aminosilane, an aminosilane having an amino group ($-NH_2$) is preferred in light of the curability, and γ-aminopropyltrimethoxysilane, γ-aminopropyltriethoxysilane, γ-aminopropylmethyldimethoxysilane, and γ-(2-aminoethyl)aminopropyltrimethoxysilane are preferred in light of the availability.

Furthermore, ketimine compounds that yield the aforementioned amine-based compound by hydrolysis may be used as the curing catalyst (J).

Examples of the curing catalyst (J) other than the aforementioned amine-based compound (J1) include carboxylic acids such as 2-ethylhexanoic acid, stearic acid, oleic acid, pivalic acid, 2,2-dimethylbutyric acid, 2,2-dimethylhexanoic acid, 2,2-dimethyloctanoic acid, 2-ethyl-2,5-dimethylhexanoic acid, neodecane acid, and versatic acid; derivatives of the aforementioned carboxylic acids (e.g., carboxylic anhydride, ester, amide, nitrile, acyl chloride); carboxylic acid metal salts such as tin carboxylate, bismuth carboxylate, titanium carboxylate, zirconium carboxylate, hafnium carboxylate, and iron carboxylate; titanium compounds such as tetrabutyl titanate, tetrapropyl titanate, titanium tetrakis(acetylacetonato), bis(acetylacetonato)diisopropoxytitanium, and diisopropoxytitanium bis(ethylacetocetate); organic tin compounds such as dibutyltin dilaurate, dioctyltin dilaurate, dibutyltin dimethoxide, dibutyltin oxide, dibutyltin bis(acetylacetonato), reaction products of dibutyltin oxide with a silicate compound, and reaction products of dibutyltin oxide with a phthalic acid ester; aluminum compounds such as aluminum tris(acetylacetonato), and diisopropoxyaluminum ethylacetoacetate; zirconium compounds such as zirconium tetrakis(acetylacetonato); various types of metal alkoxides such as tetrabutoxyhafnium; organic acidic phosphoric acid esters; organic sulfonic acids such as trifluoromethanesulfonic acid; and inorganic acids such as hydrochloric acid, phosphoric acid, and boric acid are exemplified. However,

on the aforementioned reasons and the like, the amount of the organic tin compound is preferably not greater than 5 parts by weight, more preferably not greater than 0.5 parts by weight, still more preferably not greater than 0.05 parts by weight relative to 100 parts by weight of the total amount of the polymer (H) and the polymer (M). The organic tin compound is particularly preferably not substantially contained, and most preferably not contained in the polymer. It should be noted that "substantially not containing an organic tin-based catalyst" as used herein means that the content of the organic tin compound used as the curing catalyst (J) is not greater than 0.01 parts by weight relative to 100 parts by weight of the total amount of the polymer (H) and the polymer (M).

As the curing catalyst (J), two different types of catalysts may be used in combination, and for example, by using the amine-based compound (J1) described above in combination with a carboxylic acid, an effect of improving the curability may be achieved.

The amount of the curing catalyst (J) is preferably 0.001 to 20 parts by weight, still more preferably 0.01 to 15 parts by weight, and particularly preferably 0.01 to 10 parts by weight relative to 100 parts by weight of the total amount of the polymer (H) and the polymer (M). When the amount of the blended curing catalyst (J) is less than 0.001 parts by weight, the curing speed may be insufficient, and the curing reaction may hardly proceed sufficiently. On the other hand, when the amount of the blended curing catalyst (J) exceeds 20 parts by weight, the curing speed is excessively accelerated, whereby workability is deteriorated due to shortened usable time period of the curable composition, or the storage stability tends to be inferior. Furthermore, some of the curing catalysts (J) may exude onto the surface of the cured product after the curable composition is cured, and thus they may stain the surface of the cured product. However, the polymer (H) of the present invention can exhibit sufficient curability even with a small amount of a curing catalyst; therefore, the surface conditions of the cured products can be maintained favorable while securing the curability in such cases by adjusting the amount of the curing catalyst (J) used to fall within the range of 0.01 to 1.0 parts by weight.

Into the curable composition of the present invention may be added an adhesiveness imparting agent such as a silane coupling agent as needed.

In the invention of the present application, an aminosilane is a compound also exhibits a function as the curing catalyst (J), and specific examples thereof include the aminosilane illustrated in the section of the curing catalyst (J), and the like. When the function as an adhesiveness imparting agent is to be exhibited still further, the aminosilane may be used in an amount more than needed for the curing catalyst.

The silane coupling agent other than the aminosilane is not particularly limited, and for example, isocyanate silanes such as γ-isocyanate propyltrimethoxysilane, and (isocyanatemethyl)trimethoxysilane; carbamate silanes such as methyl 3-trimethoxysilylpropylcarbamate, and methyltrimethoxysilylmethyl carbamate; ketimine type silanes such as N-(1,3-dimethylbutylidene)-3-(triethoxysilyl)-1-propaneamine; mercapto silanes such as γ-mercaptopropyltrimethoxysilane, and mercaptomethyltriethoxysilane; epoxysilanes such as γ-glycidoxypropyltrimethoxysilane; carboxysilanes such as β-carboxyethyltriethoxysilane; vinyl type unsaturated group-containing silanes such as vinyltrimethoxysilane, and γ-methacryloxypropyltrimethoxysilane; halogen-containing silanes such as γ-chloropropyltrimethoxysilane, and chloromethyltrimethoxysilane; isocyanurate silanes such as tris(3-trimethoxysilylpropyl)isocyanurate, and the like are exemplified. In addition, reaction products of the aminosilane and an epoxysilane, reaction products of the aminosilane and an isocyanate silane, reaction products of the aminosilane and a (meth)acryloyloxy group-containing silane, and the like may be also used.

The amount of the silane coupling agent used in the present invention is preferably 0.01 to 20 parts by weight relative to 100 parts by weight of the total amount of the polymer (H) and the polymer (M).

As the adhesiveness imparting agent, epoxy resins, phenol resins, sulfur, alkyl titanates, aromatic polyisocyanates, and the like other than the aforementioned silane coupling agents may be also used.

A filler may be added into the curable composition of the present invention depending on use thereof. The filler is not particularly limited, and for example, reinforcing fillers such as fumed silica, precipitated silica, crystalline silica, molten silica, dolomite, silicic anhydride, hydrated silicic acid, and carbon black; fillers such as heavy calcium carbonate, colloidal calcium carbonate, magnesium carbonate, diatomaceous earth, calcined clay, clay, talc, titanium oxide, bentonite, organic bentonite, ferric oxide, fine aluminum powder, flint powder, zinc oxide, activated zinc white, shirasu balloons, glass microballoons, organic microballoons based on a phenol resin or a vinylidene chloride resin, and resin powders such as PVC powder and PMMA powder; fibrous fillers such as glass fibers and filaments, squamous substances, particulate substances, and the like are exemplified. When a filler is used, the amount used is preferably 1 to 250 parts by weight relative to 100 parts by weight of the total amount of the polymer (H) and the polymer (M).

When the curable composition of the present invention contains sealant-cured particles as well, the cured products obtained can have an uneven rough surface and thus, the decorative feature thereof can be improved. The preferred diameter, compounding amount, material and the like of the sealant-cured particles are disclosed JP-A No. 2001-115142.

Furthermore, a silicate such as a tetramethoxysilane, a tetraethoxysilane or a partial hydrolyzed condensate thereof may be added into the curing composition of the present invention as needed. When a silicate is used, the amount thereof is preferably 0.1 to 20 parts by weight, and more preferably 0.5 to 10 parts by weight relative to 100

parts by weight of the total amount of the polymer (H) and the polymer (M).

To the curable composition of the present invention may be added a plasticizer as needed. The plasticizer is not particularly limited, and for example, phthalic acid esters such as dioctyl phthalate, and diisodecyl phthalate; nonaromatic dibasic acid esters such as dimethyl adipate; aliphatic esters such as butyl oleate; phosphoric acid esters; trimellitic acid esters; chlorinated paraffins; hydrocarbon based oils; processed oils; epoxy plasticizers, and the like are exemplified.

Also, as a polymeric plasticizer, for example, a vinyl-based polymer; an ester such as polyalkylene glycol; a polyester-based plasticizer; a polyether polyol such as a polypropylene glycol having a molecular weight of not less than 500, and still more not less than 1,000; a polystyrene; a polybutadiene, a polyisobutylene or the like may be used.

The polymeric plasticizer preferably has a number average molecular weight of 500 to 15,000.

Furthermore, when the polymeric plasticizer has a reactive silicon group, it serves as a reactive plasticizer, and thus transfer of the plasticizer from the cured product can be prevented.

The amount of the plasticizer is preferably 5 to 150 parts by weight relative to 100 parts by weight of the total amount of the polymer (H) and the polymer (M).

To the curable composition of the present invention may be added a tackifier as needed. The tackifier is not particularly limited and any well-known tackifier may be used irrespective of the state at ordinary temperatures which may be either a solid or a liquid, and for example, styrene-based block copolymers, hydrogenated products thereof, phenol resins, modified phenol resins (e.g., cashew oil-modified phenol resins, tall oil-modified phenol resins, etc.), terpene phenol resins, xylene-phenol resins, cyclopentadiene-phenol resins, coumarone indene resins, rosin-based resins, rosin ester resins, hydrogenated rosin ester resins, xylene resins, low-molecular weight polystyrene based resins, styrene copolymer resins, petroleum resins (e.g., C5 hydrocarbon resins, C9 hydrocarbon resins, C5-C9 hydrocarbon copolymer resins, etc.), hydrogenated petroleum resins, terpene based resins, DCPD resins, petroleum resins, and the like are exemplified.

The tackifying resin is preferably used in an amount of 5 to 1,000 parts by weight relative to 100 parts by weight of the total amount of the polymer (H) and the polymer (M).

To the curable composition of the present invention may be added a physical property adjusting agent for adjusting tensile characteristics of the cured product yielded, if necessary. The physical property adjusting agent is not particularly limited, and for example, alkoxysilanes such as methyltrimethoxysilane, dimethyldimethoxysilane, methyltriisopropenoxysilane, and vinyltrimethoxysilane; silicone varnishes; polysiloxanes, and the like are exemplified.

In particular, compounds that yield a compound having a monovalent silanol group in the molecule by hydrolysis has an effect of lowering the modulus of the cured product without deteriorating the stickiness of the surface of the cured product. In particular, compounds that yield trimethyl silanol are preferred.

The physical property adjusting agent is suitably used within the range of 0.1 to 20 parts by weight relative to 100 parts by weight of the total amount of the polymer (H) and the polymer (M).

To the curable composition of the present invention may be added a thixotropy imparting agent (anti-sagging agent). The anti-sagging agent is not particularly limited, and for example, polyamide waxes; hydrogenated castor oil derivatives; metal soaps such as calcium stearate, and aluminum stearate; rubber powders having a particle size of 10 to 500 $\mu$m; organic fibers, and the like are exemplified. The thixotropy imparting agent is used in an amount within the range of 0.1 to 20 parts by weight relative to 100 parts by weight of the total amount of the polymer (H) and the polymer (M).

To the curable composition of the present invention may be added a compound having an epoxy group in one molecule as needed. The compound having an epoxy group is not particularly limited, and for example, compounds such as epoxidized unsaturated fats and oils, epoxidized unsaturated fatty acid esters, alicyclic epoxy compounds and epichlorohydrin derivatives, and mixtures of the same are exemplified. The epoxy compound is suitably used in the range of 0.5 to 50 parts by weight relative to 100 parts by weight of the total amount of the polymer (H) and the polymer (M).

To the curable composition of the present invention may be added a photocurable substance as needed. The photocurable substance is not particularly limited, and well-known compounds such as organic monomers, oligomers, resins or compositions containing the same are exemplified.

The photocurable substance may be used in the range of 0.1 to 20 parts by weight relative to 100 parts by weight of the total amount of the polymer (H) and the polymer (M).

To the curable composition of the present invention may be added an oxygen-curable substance as needed. The oxygen-curable substance is not particularly limited, and for example, drying oils typified by tung oil and linseed oil, and various types of alkyd resins; drying oil-modified acrylic polymers, epoxy based resins, silicon resins; liquid polymers obtained by polymerizing or copolymerizing such a diene compound(s) as butadiene, chloroprene and/or isoprene, for example 1,2-polybutadiene, 1,4-polybutadiene and C5-C8 diene polymers, liquid copolymers obtained by copolymerizing such a diene compound with a monomer such as acrylonitrile or styrene that is copolymerizable with the diene compound, in a manner such that the diene compound serve as the main component, for example, NBR and SBR, and the like are exemplified.

The amount of the oxygen-curable substance which may be used is in the range of 0.1 to 20 parts by weight relative to 100 parts by weight of the total amount of the polymer (H) and the polymer (M) .

To the curable composition of the present invention may be added an antioxidant (anti-aging agent) as needed. The antioxidant is not particularly limited, and for example, hindered phenol type, monophenol type, bisphenol type and polyphenol type antioxidants, and the like are exemplified. The amount of the antioxidant which may be used is in the range of 0.1 to 10 parts by weight relative to 100 parts by weight of the total amount of the polymer (H) and the polymer (M).

To the curable composition of the present invention may be added a light stabilizer as needed. The light stabilizer is exemplified by benzotriazole type, hindered amine type and benzoate type compounds, and the like. The amount of the light stabilizer which may be used is in the range of preferably 0.1 to 10 parts by weight relative to 100 parts by weight of the total amount of the polymer (H) and the polymer (M).

To the curable composition of the present invention may be added an ultraviolet-ray absorbing agent as needed. The ultraviolet-ray absorbing agent is not particularly limited, and for example, benzophenone type, benzotriazole type, salicylate type, substituted tolyl type and metal chelate type compounds are exemplified. The amount of the ultraviolet-ray absorbing agent which may be used is in the range of preferably 0.1 to 10 parts by weight relative to 100 parts by weight of the total amount of the polymer (H) and the polymer (M).

To the curable composition of the present invention may be added an epoxy resin as needed. The epoxy resin is not particularly limited, and for example, epichlorohydrin-bisphenol A type epoxy resins, epichlorohydrin-bisphenol F type epoxy resins, novolak type epoxy resins, hydrogenated bisphenol A type epoxy resins, various types of alicyclic epoxy resins, N,N-diglycidylaniline, N,N-diglycidyl-o-toluidine, triglycidyl isocyanurate, polyalkylene glycol diglycidyl ether, glycidyl ethers of a polyhydric alcohol such as glycerol, hydantoin type epoxy resins and epoxidized products of an unsaturated polymer such as petroleum resins, and the like are exemplified. In order to improve impact resistance, flexibility, toughness, peel strength or the like of the epoxy resin cured product, 1 to 100 parts by weight of the total amount of the polymer (H) and the polymer (M) relative to 100 parts by weight of the epoxy resin may be used. On the other hand, in order to improve strength of the cured product of the, the epoxy resin may be used in an amount of 1 to 200 parts by weight relative to 100 parts by weight of the total amount of the polymer (H) and the polymer (M).

The curing agent for the epoxy resin is not particularly limited and any well-known curing agent for epoxy resins may be used, and for example, primary, secondary and tertiary amines, salts of tertiary amines, ketimines, polyamide resins, imidazoles, dicyandiamides, boron trifluoride complex compounds, carboxylic anhydrides, alcohols, phenols, carboxylic acids, diketone complex compounds of aluminum or zirconium are exemplified.

To the curable composition of the present invention may be added various types of additive as needed for the purpose of adjusting various physical properties of the curable composition or the cured product. Examples of such additives include curability modifiers, radical inhibitors, metal deactivators, antiozonants, phosphorus-based peroxide decomposers, lubricants, pigments, foaming agents, repellents for ants, antifungal agents, fire retardants, solvents, diluents, and the like. These various types of additive may be used alone, or two or more thereof may be used in combination. Specific examples other than the specific examples of the additives illustrated herein are shown in, for example, each publication of JP-B Nos. H04-69659 and H07-108928, and JP-A Nos. S63-254149, S64-22904 and 2001-72854.

The curable composition of the present invention can be prepared as a one-component type by compounding all formulation components in advance to seal for storage, and curing with the moisture in the air after application; or can be also prepared as a two-component type by separately compounding components such as a curing catalyst, a filler, a plasticizer and water as a curing agent, and mixing the compound matter with the polymer composition before use. In light of the workability, a one-component type is preferred.

In cases where the curable composition is of the one-component type, all the components are mixed in advance; therefore, those formulation components which contain moisture are preferably dehydrated and dried prior to use or dehydrated during compounding and kneading by reducing the pressure, etc. When the curable composition is of the two-component type, it is not necessary to blend the curing catalyst in the base material containing a reactive silyl group-containing polymer. Therefore, even if some moisture is contained in the formulation agents, the risk of gelation is low, but it is preferred that the formulation agents be dehydrated and dried when long-term storage stability is required. As for the method of dehydrating or drying, a method including drying by heating is suitable in the case of solidified matter such as powdery matter, and a method including dehydrating under reduced pressure, or a dehydration method using a synthetic zeolite, activated alumina, silica gel, quick lime, magnesium oxide or the like is suitable in the case of liquidified matter. Alternatively, dehydration may be carried out by blending an oxazolidine compound such as 3-ethyl-2-methyl-2-(3-methylbutyl)-1,3-oxazolidine to allow to react with water. In addition to such dehydration and drying methods, storage stability can be further improved by adding a lower alcohol such as methanol or ethanol; or an alkoxysilane compound such as vinyltrimethoxysilane, methyl silicate, or $\gamma$-glycidoxypropyltrimethoxysilane.

The amount of a dehydrating agent, particularly a silicon compound capable of reacting with water such as vinyltrimethoxysilane is preferably 0.1 to 20 parts by weight relative to 100 parts by weight of the total amount of the polymer (H) and the polymer (M).

The method of preparing the curable composition of the present invention is not particularly limited but there may be employed, for example, such a common method as a method including compounding the components described

above and kneading the resulting mixture at ordinary temperature or with heating using a mixer, roller, kneader, or the like, or a method including dissolving the components using a small portions of an appropriate solvent and then mixing the solutions.

When exposed to the air, the curable composition of the present invention forms a network organization three-dimensionally under the action of atmospheric moisture and thus is cured to give a solid having rubber elasticity.

## INDUSTRIAL APPLICABILITY

The curable composition of the present invention can be used for pressure-sensitive adhesives; sealants for buildings, ships, automobiles, roads, etc.; adhesives; impression materials; vibration-proof materials; damping materials; soundproof materials; expanded/foamed materials; coating compositions; spray coatings, etc. The cured products obtained by curing the curable composition of the present invention are excellent in flexibility and adhesiveness; therefore the use as sealants or adhesives is more preferred among the aforementioned applications.

In addition, the curable composition of the present invention can also be used in such various fields of application as back cover sealants for a solar cell and like electric and electronic part materials; insulating cover materials for electric wires and cables and other electric insulating materials; elastic adhesives; contact adhesives; spray sealants; crack repair materials; tiling adhesives; powder coating compositions; casting materials; rubber materials for medical use; pressure-sensitive adhesives for medical use; sealants for medical devices; food packaging materials; joint sealants for siding boards and other exterior materials; coating materials; primers; electromagnetic wave shielding conductive materials, thermally conductive materials; hot melt materials; potting agents for electrics and electronics; films; gaskets; various molding materials; rustproof and waterproof sealants for wired glass and laminated-glass edges (cut end faces); liquid sealants for use in automotive parts, electrical machinery parts, various machinery parts, etc. Further, the curable composition can also be used as various types of hermetically sealants and adhesives since it, either alone or with the aid of a primer, can adhere to a wide range of substrates such as glass, ceramics, wood, metals and resin moldings. The curable composition of the present invention can also be used in the form of interior panel adhesives, exterior panel adhesives, tiling adhesives, stone pitching adhesives, ceiling finishing adhesives, floor finishing adhesives, wall finishing adhesives, vehicle panel adhesives, electric, electronic and precision apparatus assembling adhesives, direct glazing sealants, double glazing sealants, sealants for SSG systems, or building working joint sealants.

## EXAMPLES

Next, the present invention is specifically explained by way of Examples and Comparative Examples, but the present invention is not limited thereto.

(Reference Example 1)

For the purpose of producing chloromethyldichlorosilane ($ClCH_2SiCl_2H$), to a 0.5 mol/L THF solution of chloromethyltrichlorosilane (LS-30, manufactured by Shin-Etsu Chemical Co., Ltd.) was added Red-Al (hydrogenated bis(2-methoxyethoxy)aluminum sodium, manufactured by Wako Pure Chemical Industries, Ltd.) in an amount of 0.5 molar equivalents relative to LS-30 at -68°C, and the temperature of the mixture was slowly elevated to room temperature over about 1 hour while stirring sufficiently. The reaction product was analyzed by $^1$H-NMR measurement (measured in a $CDCl_3$ solvent using an Avance III 400 MHz NMR system manufactured by Bruker, and analyzed assuming that the peak representing $CHCl_3$ appears at 7.26 ppm). Consequently, the spectrum was complicated, and the peak representing the intended chloromethyldichlorosilane was not observed, but a peak representing methylsilane yielded by reduction of a chloromethyl group was observed.

(Reference Example 2)

Operations similar to Reference Example 1 were carried out except that a 1.0 mol/L hexane solution of DIBAL-H (hydrogenated diisobutyl aluminum, manufactured by Tokyo Chemical Industry Co., Ltd.) in an amount of 1.0 molar equivalent was added in place of Red-Al at room temperature. As a result of analysis of the reaction products with a $^1$H-NMR determination, the reaction hardly proceeded, and peaks representing chloromethylchlorosilane and chloromethylsilane were only slightly observed. After this reaction solution was further heated to 65°C and the reaction was allowed for 3 hrs, a $^1$H-NMR determination was carried out, but the spectrum scarcely altered.

(Examples 1 to 17) (Reference)

Chloromethyltrichlorosilane, the hydrosilane compound (C) and tetrabutylammonium chloride as shown in Table

1 were weighed into a glass reaction vessel in a glove box in which the moisture was set to be not greater than 0.1 ppm, and the vessel was closed with an airtight stopper. The reaction vessel was allowed standing under each temperature condition, and the reaction situation was confirmed by a $^1$H-NMR determination. Peak assignment of the product derived from the obtained chloromethyltrichlorosilane on the $^1$H-NMR spectrum is as in the following: chloromethyltrichlorosilane (2H: 3.29 ppm (singlet)); chloromethyldichlorosilane (2H: 3.29 ppm (doublet), 1H: 5.56 ppm (triplet)); chloromethylchlorosilane (2H: 3.14 ppm (triplet), 2H: 4.80 ppm (triplet)); chloromethylsilane (2H: 3.00 ppm (quartet), 3H: 3.83 ppm (triplet)); methyltrichlorosilane (3H: 1.14 ppm (singlet)); methyldichlorosilane (3H: 0.89 ppm (doublet), 1H: 5.59 ppm (quartet)); methylchlorosilane (3H: 0.61 ppm (triplet), 2H: 4.76 ppm (quartet)); and methylsilane (3H: 0.19 ppm (quartet), 3H: 3.58 ppm (quartet)).

[Table 1]

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 1 | $ClCH_2SiCl_3$ (1) | 1 mmol | $Et_3SiH$ (2) | 1 mmol | TBACl (6) | 0.01 mmol | 80°C | 6 hrs |
| Ex. 2 | $ClCH_3SiCl_3$ | 1 mmol | $Et_3SiH$ | 1 mmol | TBACl | 0,01 mmol | 80°C | 24 hrs |
| Ex. 3 | $ClCH_2SiCl_3$ | 27 mmol | $Et_3SiH$ | 26 mmol | TBACl | 0.18 mmol | 80°C | 20 hrs |
| Ex. 4 | $ClCH_2SiCl_3$ | 27 mmol | $Et_3SiH$ | 26 mmol | TBACl | 0.18 mmol | 80°C | 4 days |
| Ex. 5 | $ClCH_2SiCl_3$ | 1 mmol | $Et_3SiH$ | 1 mmol | TBACl | 0.01 mmol | 100°C | 1 hrs |
| Ex. 6 | $ClCH_2SiCl_3$ | 1 mmol | $Et_3SiH$ | 1 mmol | TBACl | 0.01 mmol | 100°C | 4 hrs |
| Ex. 7 | $ClCH_2SiCl_3$ | 1 mmol | $Et_3SiH$ | 1 mmol | TBACl | 0.01 mmol | 100°C | 6 hrs |
| Ex. 8 | $ClCH_2SiCl_3$ | 1 mmol | $Et_3SiH$ | 1 mmol | TBACl | 0.01 mmol | 100°C | 24 hrs |
| Ex. 9 | $ClCH_2SiCl_3$ | 1 mmol | DH4 (3) | 0.25 mmol | TBACl | 0.01 mmol | 80°C | 2.5 hrs |
| Ex. 10 | $ClCH_2SiCl_3$ | 1 mmol | DH4 | 0.25 mmol | TBACl | 0.01 mmol | 80°C | 18 hrs |
| Ex. 11 | $ClCH_2SiCl_3$ | 27 mmol | DH4 | 6.67 mmol | TBACl | 0.18 mmol | 80°C | 2 hrs |
| Ex. 12 | $ClCH_2SiCl_3$ | 1 mmol | DH4 | 0.25 mmol | TBACl | 0.01 mmol | 90°C | 2 hrs |
| Ex. 13 | $ClCH_2SiCl_3$ | 1 mmol | H oil (4) | 0.06 g | TBACl | 0.01 mmol | 80°C | 2.5 hrs |
| Ex. 14 | $ClCH_2SiCl_3$ | 1 mmol | H oil | 0.06 g | TBACl | 0.01 mmol | 80°C | 18 hrs |
| Ex. 15 | $ClCH_2SiCl_3$ | 1 mmol | H oil | 0.06 g | TBACl | 0.01 mmol | 90°C | 2 hrs |
| Ex. 16 | $ClCH_2SiCl_3$ | 1 mmol | $PhMe_2SiH$ (5) | 1 mmol | TBACl | 0.01 mmol | 90°C | 2 hrs |
| Ex. 17 | $ClCH_2SiCl_3$ | 1 mmol | $PhMe_2SiH$ | 1 mmol | TBACl | 0.01 mmol | 90°C | 17 hrs |

(1) : manufactured by Shin-Etsu Chemical Co., Ltd., LS30 (chloromethyltrichlorosilane)
(2): manufactured by Shin-Etsu Chemical Co., Ltd., LS1320 (triethylsilane)
(3) : manufactured by Shin-Etsu Chemical Co., Ltd., LS8600 (1,3,5,7-tetramethylcyclotetrasiloxane)
(4): manufactured by Momentive Performance Materials Japan Inc., TSF484 (methylhydrogenpolysiloxane)
(5) : manufactured by Shin-Etsu Chemical Co., Ltd., LS2010 (dimethylphenylsilane)
(6): manufactured by Wako Pure Chemical Industries, Ltd., tetrabutylammonium chloride

Table 2 shows yielding ratio of each product derived from chloromethyltrichlorosilane drawn from the determined $^1$H-NMR spectrum. Note that the indication of "-" in Table below means that the integration ratio in the $^1$H-NMR spectrum is less than 1.

[Table 2]

| | Reaction product (molar ratio) | | | | | | |
|---|---|---|---|---|---|---|---|
| | $ClCH_2SiCl_3$ | $ClCH_2SiCl_2H$ | $ClCH_2SiClH_2$ | $ClCH_2SiH_3$ | $CH_3SiCl_3$ | $CH_3SiCl_2H$ | $CH_3SiClH_2$ |
| Ex. 1 | 77 | 23 | - | - | - | - | - |
| Ex. 2 | 27 | 53 | 13 | 1 | 4 | 2 | - |
| Ex. 3 | 57 | 38 | 3 | - | - | - | - |
| Ex. 4 | 32 | 46 | 7 | - | 10 | 4 | - |
| Ex. 5 | 93 | 7 | - | - | - | - | - |
| Ex. 6 | 49 | 44 | 3 | 3 | - | - | - |
| Ex. 7 | 35 | 48 | 6 | - | 8 | 2 | - |
| Ex. 8 | 28 | 16 | 2 | - | 45 | 9 | - |
| Ex. 9 | 13 | 48 | 16 | 1 | 9 | - | - |
| Ex. 10 | 5 | 21 | 27 | 2 | 17 | 24 | 5 |
| Ex. 11 | 20 | 52 | 9 | - | 14 | 6 | 5 |
| Ex. 12 | 14 | 34 | 16 | 1 | 18 | 9 | 5 |
| Ex. 13 | 37 | 40 | 5 | - | 13 | 5 | - |
| Ex. 14 | 12 | 30 | 23 | 2 | 17 | 16 | - |
| Ex. 15 | 47 | 26 | 7 | - | 16 | 4 | - |
| Ex. 16 | 31 | 51 | 18 | 1 | - | - | - |
| Ex. 17 | 30 | 39 | 16 | 1 | 11 | 4 | - |

It is proven that each silane compound was yielded at ratios shown in the Table. When triethylsilane was used as the hydrosilane (C) (Examples 1 to 8), favorable selectivity of the monohydrogenated product was achieved. In addition, when LS8600 (Examples 9 to 12) or H oil (Examples 13 to 15) was used, high reactivity was indicated. In particular, when dimethylphenylsilane was used (Examples 16 and 17), high reactivity was indicated, and the yielding ratio of the compound having a reduced chloromethyl group was lowered. Moreover, a longer reaction time results in a greater amount of consumption of the source material even under the same reaction conditions, but in some cases, the yielding ratio of chloromethyldichlorosilane was lowered and the ratio of the by-product increased.

(Example 18) (Reference)

Into a three-necked flask equipped with a dripping funnel, a thermometer and a stirrer was weighed 1 mmol of tetrabutylammonium chloride (manufactured by Wako Pure Chemical Industries, Ltd.) under reflux, and the atmosphere in the reaction apparatus was replaced with a dry nitrogen atmosphere. From the dripping funnel were added thereto 100 mmol of chloromethyltrichlorosilane (LS-30), and 100 mmol of dimethylphenylsilane (LS-2010, manufactured by Shin-Etsu Chemical Co., Ltd.), and the reaction temperature was elevated to 90°C while the mixture was well stirred. After the reaction was allowed for 2 hrs, the yielding ratio of the silane product derived from chloromethyltrichlorosilane was confirmed by $^1$H-NMR, revealing chloromethyltrichlorosilane (LS-30) of 30%, chloromethyldichlorosilane of 52%, and chloromethylchlorosilane of 18%, whereas a by-product having a reduced chloromethyl group was not observed.

(Examples 19 to 23) (Reference)

As shown in Table 3, chloromethyltrichlorosilane, the hydrosilane compound (C) and the catalyst (D) were weighed into a glass tube type reaction vessel, and the tube was sealed after devolatilization. The reaction was allowed at a temperature for a time period shown in the Table, and the ratio of the silane product derived from chloromethyltrichlorosilane of the reaction product determined by a $^1$H-NMR spectrum is shown in Table 4.

[Table 3]

| | Halosilane (B) | | Hydrosilane (C) | | Catalyst (D) | | Reaction tempeerature | Reaction time |
|---|---|---|---|---|---|---|---|---|
| | Compound name | Amount charged | Compound name | Amount charged | Compound name | Amount charged | | |
| Ex. 19 | $ClCH_2SiCl_3$ (1) | 1 mmol | $Et_3SiH$ (2) | 1 mmol | TBACI (4) | 0.01 mmol | 90°C | 4 hrs |
| Ex. 20 | $ClCH_2SiCl_3$ | 1 mmol | $Et_3SiH$ | 1 mmol | TBACI | 0.01 mmol | 90°C | 8 hrs |
| Ex. 21 | $ClCH_2SiCl_3$ | 1 mmol | $Et_3SiH$ | 1 mmol | TBPCI (5) | 0.01 mmol | 90°C | 2 hrs |
| Ex. 22 | $ClCH_2SiCl_3$ | 1 mmol | $Ph_2MeSiH$ (3) | 1 mmol | TBACI | 0.01 mmol | 90°C | 2 hrs |
| Ex. 23 | $ClCH_2SiCl_3$ | 1 mmol | $Ph_2MeSiH$ | 1 mmol | TBPCI | 0.01 mmol | 90°C | 2 hrs |

(1) : manufactured by Shin-Etsu Chemical Co., Ltd., LS30 (chloromethyltrichlorosilane)
(2): manufactured by Shin-Etsu Chemical Co., Ltd., LS1320 (triethylsilane)
(3): manufactured by Gelest, SID4555.0 (methyldiphenylsilane)
(4): manufactured by Wako Pure Chemical Industries, Ltd., tetrabutylammonium chloride
(5) : manufactured by Sigma-Aldrich Corporation, tetrabutylphosphonium chloride

[Table 4]

| | Reaction product (molar ratio) | | | |
|---|---|---|---|---|
| | $ClCH_2SiCl_3$ | $ClCH_2SiCl_2H$ | $ClCH_2SiClH_2$ | $CH_3SiCl_3$ |
| Example 19 | 84 | 15 | - | - |
| Example 20 | 29 | 60 | 3 | 6 |
| Example 21 | 31 | 61 | 3 | 4 |
| Example 22 | 43 | 54 | 2 | - |
| Example 23 | 23 | 65 | 7 | 3 |

As shown in Table 4, when triethylsilane was used as the hydrosilane (C), the intended substance was obtained within a short period of time by using tributylphosphonium chloride as the catalyst. In addition, when diphenylmethylsilane having a phenyl group was used as the hydrosilane (C), the intended chloromethyldichlorosilane ($ClCH_2SiCl_2H$) was successfully obtained at a higher ratio within a shorter period of time than the case in which triethylsilane was used. Furthermore, the intended substance was obtained at a higher ratio when tributylphosphonium chloride was used as a catalyst than the case in which tetrabutylammonium chloride was used.

(Examples 24 to 27) (Reference)

As shown in Table 5, chloromethyltrichlorosilane, dichloromethylsilane ($MeSiCl_2H$), and tetrabutylammonium chloride were allowed to react under the conditions shown below. In Example 24, each component was weighed into a reaction vessel equipped with a reflux tube, and the reaction was allowed under a nitrogen stream. In Example 25, each component was weighed into an autoclave reactor, which was closed with an airtight stopper to permit the reaction. In Examples 26 and 27, each component was weighed into a glass tube type reaction vessel, which was sealed after devolatilization to permit the reaction. Table 6 shows the ratio of the products of the chloromethyl group-containing silane determined by a $^1H$-NMR spectrum.

[Table 5]

| | Halosilane (B) | | Hydrosilane (C) | | catalyst (D) | | Reaction temperature | Redaction time |
|---|---|---|---|---|---|---|---|---|
| | Compound name | Amount charged | Compound name | Amount charged | Compound name | Amount charged | | |
| Ex. 24 | $ClCH_2SiCl_3$ (1) | 5 mmol | $MeSiCl_2H$ (2) | 5 mmol | TBACl (3) | 0.05 mmol | 50°C | 3 hrs |
| Ex. 25 | $ClCH_2SiCl_3$ | 5 mmol | $MeSiCl_2H$ | 5 mmol | TBACl | 0.05 mmol | 90°C | 2 hrs |
| Ex. 26 | $ClCH_2SiCl_3$ | 3 mmol | $MeSiCl_2H$ | 3 mmol | TBACl | 0.03 mmol | 90°C | 2 hrs |
| Ex. 27 | $ClCH_2SiCl_3$ | 1 mmol | $MeSiCl_2H$ | 2 mmol | TBACl | 0.01 mmol | 90°C | 2 hrs |

(1): manufactured by Shin-Etsu Chemical Co., Ltd., LS30 (chloromethyltrichlorosilane)
(2): manufactured by Shin-Etsu Chemical Co., Ltd., LS50 (dichloromethylsilane)
(3): manufactured by Wako Pure Chemical Industries, Ltd., tetrabutylammonium chloride

[Table 6]

| | Reaction product (molar ratio) | | |
|---|---|---|---|
| | $ClCH_2SiCl_3$ | $ClCH_2SiCl_2H$ | $ClCH_2SiClH_2$ |
| Example 24 | 70 | 29 | 1 |
| Example 25 | 40 | 54 | 5 |
| Example 26 | 55 | 43 | 1 |
| Example 27 | 36 | 60 | 2 |

As shown in Table 6, it was revealed that dichloromethylsilane is effective as the hydrosilane (C). The intended chloromethyldichlorosilane was obtained even at a comparatively low temperature as in Example 24, whereas the proportion of yielding the intended substance increased by elevating the reaction temperature as in Examples 25 to 27.

(Examples 28 to 32) (Reference)

As shown in Table 7, chloromethyltrichlorosilane, the hydrosilane (C), and tetrabutylammonium chloride were weighed into a glass tube type reaction vessel, which was sealed after devolatilization to permit the reaction. Table 8 shows the ratio of the silane product derived from chloromethyltrichlorosilane determined by a $^1$H-NMR spectrum.

[Table 7]

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 28 | $ClCH_2SiCl_3$ (1) | 1 mmol | $MeSiCl_2H$ (2) | 1 mmol | TBACl (6) | 0.01 mmol | 90°C | 2 hrs |
| Ex. 29 | $ClCH_2SiCl_3$ | 1 mmol | $PhSiH_3$ (3) | 0.3 mmol | TBACl | 0.01 mmol | 90°C | 2 hrs |
| Ex. 30 | $ClCH_2SiCl_3$ | 1.3 mmol | $PhSiH_3$ | 0.6 mol | TBACl | 0.01 mmol | 90°C | 2 hrs |
| Ex. 31 | $ClCH_2SiCl_3$ | 1 mmol | $Pn_2SiH_2$ (4) | 0.5 mmol | TBACl | 0.01 mmol | 90°C | 2 hrs |
| Ex. 32 | $ClCH_2SiCl_3$ | 1 mmol | $PhSiCl_2H$ (5) | 3 mmol | TBACl | 0.01 mmol | 90°C | 2 hrs |

(1): manufactured by Shin-Etsu Chemical Co., Ltd., LS30 (chloromethyltrichlorosilane)
(2): manufactured by Gelest, SID4070.0 (dimethylchlorosilane)
(3): manufactured by Gelest, SID6750.0 (phenylsilane)
(4): manufactured by Gelest, SID4559.0 (diphenylsilane)
(5): dichlorophenylsilane: synthesized by redistribution of phenyltrichlorosilane, and dichloromethylsilane, followed by purification
(6): manufactured by Wako Pure Chemical Industries, Ltd., tetrabutylammonium chloride

[Table 8]

| | Reaction product (molar ratio) | | | |
|---|---|---|---|---|
| | $ClCH_2SiCl_3$ | $ClCH_2SiCl_2H$ | $ClCH_2SiClH_2$ | $CH_3SiCl_3$ |
| Example 28 | 67 | 31 | - | - |
| Example 29 | 40 | 54 | 4 | 1 |
| Example 30 | 8 | 64 | 24 | 2 |

(continued)

| | Reaction product (molar ratio) | | | |
|---|---|---|---|---|
| | $ClCH_2SiCl_3$ | $ClCH_2SiCl_2H$ | $ClCH_2SiClH_2$ | $CH_3SiCl_3$ |
| Example 31 | 40 | 50 | 7 | 1 |
| Example 32 | 19 | 69 | 10 | 1 |

As shown in Table 8, when dimethylchlorosilane was used as the hydrosilane (C), lower yielding ratios of the dihydrogenated product and the trihydrogenated product among by-products tend to be attained. In addition, although the intended chloromethyldichlorosilane was obtained at a high yielding ratio with any of the hydrosilane (C) having a phenyl group, when the molar ratio of Si-H of the hydrosilane (C) with respect to chloromethyltrichlorosilane is great as in Examples 30 and 32, the proportion of chloromethylchlorosilane ($ClCH_2SiClH_2$) that is a dihydrogenated product increased.

(Examples 33 to 40) (Reference)

As shown in Table 9, chloromethyltrichlorosilane, dichloromethylsilane ($MeSiCl_2H$) and the catalyst (D) were weighed into a pressure tight reaction vessel, followed by replacing the atmosphere in the vessel with a nitrogen atmosphere, and the vessel was closed with an airtight stopper to permit the reaction. Table 10 shows the ratio of the products of the chloromethyl group-containing silane determined by a $^1H$-NMR spectrum.

[Table 9]

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 33 | $ClCH_2SiCl_3$ (2) | 5 mmol | $MeSiCl_2H$ (2) | 5 mmol | TBACl (3) | 0.10 mmol | 90°C | 2 hrs |
| Ex. 34 | $ClCH_2SiCl_3$ | 5 mmol | $MeSiCl_2H$ | 5 mmol | TBACl | 0.05 mmol | 90°C | 2 hrs |
| Ex. 35 | $ClCH_2SiCl_3$ | 5 mmol | $MeSiCl_2H$ | 5 mmol | TBACl | 0.025 mmol | 90°C | 2 hrs |
| Ex. 36 | $ClCH_2SiCl_3$ | 5 mmol | $MeSiCl_2H$ | 5 mmol | TBACl | 0.0005 mmol | 90°C | 2 hrs |
| Ex. 37 | $ClCH_2SiCl_3$ | 5 mmol | $MeSiCl_2H$ | 5 mmol | TBACl (4) | 0.05 mmol | 90°C | 2 hrs |
| Ex. 38 | $ClCH_2SiCl_3$ | 5 mmol | $MeSiCl_2H$ | 5 mmol | MTBACl (5) | 0.05 mmol | 90°C | 2 hrs |
| Ex. 39 | $ClCH_2SiCl_3$ | 5 mmol | $MeSiCl_2H$ | 5 mmol | BnTBAC (6) | 0.05 mmol | 90°C | 2 hrs |
| Ex. 40 | $ClCH_2SiCl_3$ | 5 mmol | $MeSiCl_2H$ | 5 mmol | MTOAC (7) | 0.05 mmol | 90°C | 2 hrs |

(1): manufactured by Shin-Etsu Chemical Co., Ltd., LS30 (chloromethyltrichlorosilane)
(2): manufactured by Shin-Etsu Chemical Co., Ltd., LS50 (dichloromethylsilane)
(3): manufactured by Wako Pure Chemical Industries, Ltd., tetrabutylammonium chloride
(4): manufactured by Lion Corporation, tetrabutylammonium bromide
(5): manufactured by SACHEM ASIA Inc., methyltributylammonium chloride
(6): manufactured by Dishman Japan Limited., benzyltributylammonium chloride
(7): manufactured by Dishman Japan Limited., methyltrioctylammonium chloride

[Table 10]

| | Reaction product (molar ratio) | | |
|---|---|---|---|
| | $ClCH_2SiCl_3$ | $ClCH_2SiCl_2H$ | $ClCH_2SiClH_2$ |
| Example 33 | 44 | 49 | 6 |
| Example 34 | 40 | 54 | 5 |
| Example 35 | 45 | 49 | 6 |
| Example 36 | 98 | 2 | 0 |
| Example 37 | 44 | 49 | 7 |
| Example 38 | 44 | 49 | 7 |
| Example 39 | 60 | 37 | 3 |
| Example 40 | 49 | 44 | 8 |

As in Examples 33 to 36, the amount of the catalyst (D) affects the rate of reaction, and the ratio of the products. When the amount of the catalyst is small, a long period of time is required for yielding the intended chloromethyldichlorosilane, and it is proven that the amount of the catalyst (D) of about 1% by mole relative to the chloromethyltrichlorosilane enables the intended substance to be obtained with good efficiency.

In addition, it was revealed that also the catalysts (D) demonstrated in Examples 37 to 40 are effective as the catalyst (D) of the present invention.

(Example 41) (Reference)

Into a reaction vessel equipped with a reflux tube was weighed 1.2 g of tributylmethylammonium chloride (manufactured by SACHEM ASIA Inc.), and the atmosphere in the reaction apparatus was replaced with a dry nitrogen atmosphere. Thereto were added 92 g of chloromethyltrichlorosilane (manufactured by Shin-Etsu Chemical Co., Ltd.), and 58 g of dichloromethylsilane ($MeSiCl_2H$, manufactured by Shin-Etsu Chemical Co., Ltd.), and the temperature of the mixture was elevated while stirring well. Since reflux of dichloromethylsilane started at a reaction temperature of about 60°C, the reaction was allowed in this situation for 2 hrs, and the ratio of the products of the chloromethyl group-containing silane was determined by $^1H$-NMR to reveal the percentage of: chloromethyltrichlorosilane being 69%; chloromethyldichlorosilane being 30%; and chloromethylchlorosilane being 1%. First, the silane mixture and the catalyst were separated by vacuum distillation. Next, fractional distillation was carried out by distillation under ordinary pressure to obtain a fraction containing chloromethyltrichlorosilane as a principal component of about 40 g, a fraction containing chloromethyldichlorosilane as a principal component of about 28 g, a fraction containing methyltrichlorosilane as a principal component of about 25 g, and a fraction containing dichloromethylsilane as a principal component of about 22 g.

(Example 42) (Reference)

A reaction was initiated in a similar manner to Example 41 except that 95 g of chloromethyltrichlorosilane, and 63 g of dichloromethylsilane were used After the reaction was allowed for 2 hrs, 22 g of dichloromethylsilane obtained in Example 41 was further added thereto, and the reaction was further allowed for 2 hrs. The yielding ratio of the chloromethyl group-containing silane was ascertained to reveal: chloramethyltrichlorosilane of 49%; chloromethyldichlorosilane of 44%; and chloromethylchlorosilane of 2%. Distillation operation was performed similarly to Example 41 to obtain 38 g of chloromethyldichlorosilane having a purity of 90%.

(Examples 43 to 47) (Reference)

As shown in Table 11, chloromethyltrichlorosilane, dichloromethylsilane, and the catalyst (D) were weighed into a pressure tight reaction vessel, followed by replacing the atmosphere in the vessel with a nitrogen atmosphere, and the vessel was closed with an airtight stopper to permit the reaction. Among the solid catalysts used in these Examples, Amberlyst A-21, and Diaion(R) WA30 used had been washed with water, methanol, toluene and hexane in this order, and then vacuum dried. Amberlyst B-20HG used had been directly subjected to vacuum drying. Table 12 shows the ratio of the products of the chloromethyl group-containing silane determined by a $^1H$-NMR spectrum.

[Table 11]

| | Halosilane (B) | | Hydrosilane (C) | | Catalyst (D) | | Reaction temperapture | Reaction time |
|---|---|---|---|---|---|---|---|---|
| | Compound name | Amount charged | Compound name | Amount charged | Compound name | Amount charged | | |
| Ex, 43 | $ClCH_2SiCl_3$ (1) | 5 mmol | $MeSiCl_2H$ (2) | 5 mmol | A21 (3) | 0.05 g | 90°C | 2 hrs |
| Ex. 44 | $ClCH_2SiCl_3$ | 5 mmol | $MeSiCl_2H$ | 5 mmol | A21 | 0.25 g | 90°C | 2 hrs |
| Ex. 45 | $ClCH_2SiCl_3$ | 5 mmol | $MeSiCl_2H$ | 5 mmol | A21 | 0.5 g | 90°C | 2 hrs |
| Ex. 46 | $ClCH_2SiCl_3$ | 5 mmol | $MeSiCl_2H$ | 5 mmol | B20 (4) | 0.05 g | 90°C | 2 hrs |
| Ex. 47 | $ClCH_2SiCl_3$ | 5 mmol | $MeSiCl_2H$ | 5 mmol | WA30 (5) | 0.05 g | 90°C | 2 hrs |

(1): manufactured by Shin-Etsu Chemical Co., Ltd., LS30 (chloromethyltrichlorosilane)
(2): manufactured by Shin-Etsu Chemical Co., Ltd., LS50 (dichloromethylsilane)
(3) :manufactured by Organo Corporation, Amberlyst A21 (weakly basic anion exchange resin having a dimethylamino group)
(4) :manufactured by Organo Corporation, Amberlyst B20-HG·DRY (weakly basic anion exchange resin having a dimethylamino group)
(5): manufactured by Mitsubishi Chemical Corporation, Diaion(R) WA30 (weakly basic anion exchange resin having a dimethylamino group)

[Table 12]

| | Reaction product (molar ratio) | | |
|---|---|---|---|
| | $ClCH_2SiCl_3$ | $ClCH_2SiCl_2H$ | $ClCH_2SiClH_2$ |
| Example 43 | 66 | 32 | 1 |
| Example 44 | 53 | 45 | 2 |
| Example 45 | 52 | 43 | 5 |
| Example 46 | 69 | 30 | 1 |
| Example 47 | 74 | 24 | 1 |

As show in Table 12, it was proven that the intended chloromethyldimethoxysilane was obtained even when various types of weakly basic anion exchange resin were used as the catalyst. In particular, when Amberlyst A21 was used, the intended substance was obtained at a high ratio of the products.

(Example 48) (Reference)

Into a reaction vessel equipped with a reflux tube was weighed 1.3 g of Amberlyst A-21 (manufactured by Organo Corporation) which had been washed and dried, and the atmosphere in the reaction apparatus was replaced with a dry nitrogen atmosphere. Thereto were added 4.6 g of chloromethyltrichlorosilane, and 2.9 g of dichloromethylsilane ($MeSiCl_2H$), and the temperature of the mixture was elevated while stirring well. The reaction was allowed for 2 hrs while refluxing the reaction liquid. The yielding ratio of the chloromethyl group-containing silane was determined by $^1$H-NMR to reveal the percentage of: chloromethyltrichlorosilane being 69%; chloromethyldichlorosilane being 31%; and chloromethylchlorosilane being 1%.

The reaction liquid was removed in the state in which Amberlyst A21 was left in the reaction apparatus, and thereto were charged chloromethyltrichlorosilane and dichloromethylsilane similarly to the aforementioned Examples to permit the reaction. The reaction was repeated four times, revealing the yielding ratios of chloromethyldichlorosilane of 36%, 39%, 36% and 36%, respectively.

(Examples 49 to 52) (Reference)

As shown in Table 13, chloromethylmethyldichlorosilane, the hydrosilane (C), and the catalyst (D) were weighed into a glass tube type reaction vessel, which was sealed after devolatilization to permit the reaction. Table 14 shows the ratio of the products of the chloromethyl group-containing silane determined by a $^1$H-NMR spectrum.

[Table 13]

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 49 | $ClCH_2(Me)SiCl_2$ (1) | 1 mmol | $PhSiH_3$ (2) | 1 mmol | TBACI (4) | 0.01 mmol | 90°C | 2 hrs |
| Ex. 50 | $ClCH_2(Me)SiCl_2$ | 1 mmol | $PhSiH_2$ | 1 mmol | TBPCI (6) | 0.01 mmol | 90°C | 2 hrs |
| Ex. 51 | $ClCH_2(Me)SiCl_2$ | 1 mmol | $Ph_2SiH_2$ (3) | 1 mmol | TBACI (4) | 0.01 mmol | 90°C | 2 hrs |

(continued)

| | Halosilane (B) | | Hydrosilane (C) | | Catalyst (D) | | Reaction temperature | Reaction time |
|---|---|---|---|---|---|---|---|---|
| | Compound name | Amount charged | Compound name | Amount charged | Compound name | Amount charged | | |
| Ex. 52 | $ClCH_2(Me)SiCl_2$ | 1 mmol | $Ph_2SiH_2$ | 1 mmol | TBPCl (6) | 0.01 mmol | 90°C | 2 hrs |
| (1): manufactured by Shin-Etsu Chemical Co., Ltd., LS110 (chloromethylmethyldichlorosilane)<br>(2): manufactured by Gelest, SIP6750.0 (phenylsilane)<br>(3): manufactured by Gelest, SID4559.0 (diphenylsilane)<br>(4): manufactured by Wako Pure Chemical Industries, Ltd., tetrabutylammonium chloride<br>(5): manufactured by Sigma-Aldrich Japan Corporation, tetrabutylphosphonium chloride | | | | | | | | |

[Table 14]

| | Reaction product (molar ratio) | | |
|---|---|---|---|
| | $ClCH_2(Me)SiCl_2$ | $ClCH_2(Me)SiClH$ | $ClCH_2(Me)SiH_2$ |
| Example 49 | 32 | 62 | 6 |
| Example 50 | 30 | 63 | 7 |
| Example 51 | 27 | 63 | 10 |
| Example 52 | 30 | 60 | 10 |

As shown in Table 14, the intended chloromethylmethylchlorosilane ($ClCH_2(CH_2)SiClH$) was successfully obtained also with chloromethylmethyldichlorosilane by allowing a reaction with the hydrosilane (C) having a phenyl group.

(Example 53) (Reference)

The reaction liquid obtained in Example 18 was subjected to rough distillation to obtain a mixture of chloromethyltrichlorosilane, chloromethyldichlorosilane and chloromethylchlorosilane (molar ratio of 22: 58: 20). To this mixture was added trimethyl orthoformate in an equimolar to the total mol number of Si-Cl, and then was slowly added dehydrated methanol in an equimolar to trimethyl orthoformate at room temperature. One hour later, the reaction was terminated, and the reaction solution was analyzed with $^1$H-MMR determination. As a result, it ascertained that chloromethyltrimethoxysilane, chloromethyldimethoxysilane, and chloromethylmethoxysilane were quantitatively obtained, respectively.

The reaction liquid was subjected to strict distillation to remove by-products, i.e., methane chloride, methyl formate, chloromethylmethoxysilane, chloromethyltrimethoxysilane and the like, whereby chloromethyldimethoxysilane having a purity of not less than 95% was obtained. Peak assignment of chloromethyldimethoxysilane on the $^1$H-NMR spectrum: 1H: 4.55 ppm (triplet), 6H: 3.65 ppm (singlet), and 2H; 2.83 ppm (doublet).

(Example 54) (Reference)

A reaction vessel the atmosphere of which was replaced with a nitrogen atmosphere was charged with 1 mmol of chloromethyldichlorosilane, and thereto was added 2 mmol of trimethyl phosphite (manufactured by Sigma-Aldrich Japan Corporation) at 0°C. Thereto was then added 2 mmol of dehydrated methanol dropwise, and the temperature of the reaction was elevated to room temperature. Fifty minutes later, the reaction liquid was sampled, and the reaction situation was observed with $^1$H-NMR. Thus, it was ascertained that the source material disappeared, and chloromethyldimethoxysilane was yielded as a main product.

(Example 55) (Reference)

A reaction vessel the atmosphere of which was replaced with a nitrogen atmosphere was charged with 75 mmol of chloromethyldichlorosilane, and thereto was added 150 mmol of trimethyl orthoformate (manufactured by Wako Pure Chemical Industries, Ltd., moisture content: 0.012%) dropwise at 0°C. After the dropwise addition, the temperature of the reaction liquid was elevated to room temperature to permit the reaction. Sampling was conducted ten minutes

later, and the reaction situation was observed with $^1$H-NMR. Thus, it was ascertained that the source material disappeared, and chloromethyldimethoxysilane was yielded. Chloromethylchloromethoxysilane ($ClCH_2SiCl(OCH_3)H$) was not detected, and thus it was ascertained that chloromethyldichlorosilane can be completely methoxidated within a short period of time.

(Example 56) (Reference)

To a mixture of chloromethyltrichlorosilane, chloromethyldichlorosilane and chloromethylchlorosilane (molar ratio of 22: 64: 14) obtained in a similar manner to Example 18 was added triethyl orthoformate (manufactured by Wako Pure Chemical Industries, Ltd., moisture content: 0.004%) in an equimolar to the total mol number of Si-Cl under a nitrogen atmosphere at 0°C. The temperature of the mixture was elevated to room temperature, and sampling was conducted 15 min later to observe the reaction situation with $^1$H-NMR. Thus, it was ascertained that the source material disappeared, and chloromethyldiethoxysilane was yielded. Peak assignment of chloromethyldiethoxysilane on the $^1$H-NMR spectrum: 1H: 4.56 ppm (triplet), 4H: 3.95 ppm (quartet), 2.79 ppm (doublet), and 6H: 1.28 ppm (triplet).

(Reference Example 3)

Using polyoxypropylenediol having a molecular weight of about 2,000 as an initiator, propylene oxide was polymerized with a zinc hexacyanocobaltate glyme complex catalyst to obtain polyoxypropylene having a terminal hydroxyl group and having a number average molecular weight of about 14,500 (polystyrene-equivalent molecular weight determined using HLC-8120 GPC manufactured by Tosoh Corporation as a solvent delivery system and a TSK-GEL H type column manufactured by Tosoh Corporation, with THF as a solvent). Subsequently, thereto was added a methanol solution of NaOMe in an amount of 1.2 equivalents relative to the hydroxyl groups of this hydroxyl group-terminated polyoxypropylene, and methanol was distilled off. Furthermore, allyl chloride was added thereto to convert the terminal hydroxyl group to an allyl group. Unreacted allyl chloride was removed by volatilization under reduced pressure. To 100 parts by weight of thus obtained unpurified allyl group-terminated polyoxypropylene were added 300 parts by weight of n-hexane and 300 parts by weight of water, followed by mixing with stirring. Thereafter, water was removed by centrifugal separation, and 300 parts by weight of water was further added to the obtained hexane solution, followed by mixing with stirring. After water was removed again by centrifugal separation, hexane was removed by volatilization under reduced pressure. Accordingly, bifunctional polyoxypropylene (I-1) having a terminal allyl group and having a number average molecular weight of about 14,500 was obtained.

The obtained allyl-terminated polyoxypropylene (I-1) in an amount of 100 parts by weight was allowed to react with 1.8 parts by weight of dimethoxymethylsilane at 90°C for 2 hrs using 150 ppm of an isopropyl alcohol solution of a platinum-vinylsiloxane complex having a platinum content of 3% by weight as a catalyst. Subsequently, the reaction liquid was subjected to volatilization under reduced pressure using a vacuum pump at 90°C for 2 hrs. Determination with $^1$H-NMR (determined using an Avance III 400 MHz NMR system manufactured by Bruker, in a $CDCl_3$ solvent, and analyzed assuming that a peak at 7.26 ppm represents $CHCl_3$) showed that a peak representing an allyl group disappeared, and a peak suggesting that a methyldimethoxysilyl group was introduced was observed. Thus, it was ascertained that a methyldimethoxysilyl group-terminated polyoxypropylene-based polymer (M-1) was obtained.

In the $^1$H-NMR spectrum, an integrated value of the $CH_3$ peak in the main chain of the polymer (I-1) is designated as S-I1, whereas an integrated value of the terminal $CH_2$ peak of the allyl group is designated as M-I1. Further, an integrated value of the $CH_3$ peak in the main chain of the polymer (M-1) is designated as S-M1, whereas an integrated value of the $SiCH_2$ peak is designated as M-M1. An induction rate (Fn) of the methyldimethoxysilyl group was derived by the following formula:

$$Fn = (M\text{-}M1/S\text{-}M1)/\ (M\text{-}I1/S\text{-}I1) \times 100\ (\%)$$

, whereby Fn was determined to be 80%. Thus, it was proven that the polymer (M-1) contains methyldimethoxysilyl groups in the number of 1.6 on average per molecule.

(Reference Example 4)

Operations similar to Reference Example 3 were carried out except that 2.1 parts by weight of trimethoxysilane was used in place of 1.8 parts by weight of dimethoxymethylsilane to obtain a trimethoxysilyl group-terminated polyoxypropylene-based polymer (M-2).

(Example 57)

The allyl-terminated polyoxypropylene (I-1) in an amount of 100 parts by weight was allowed to react with 2.7 parts by weight of chloromethyldichlorosilane at 90°C for 2 hrs using 500 ppm of an isopropyl alcohol solution of chloroplatinic acid having a platinum content of 3% by weight as a catalyst. Subsequently, the reaction liquid was subjected to volatilization under reduced pressure using a vacuum pump at 90°C for 2 hrs. Determination with $^1$H-NMR showed that a peak representing an allyl group disappeared, and a peak suggesting that a chloromethyldichlorosilyl group was introduced was observed at 2.79 ppm. Thus, it was ascertained that a chloromethyldichlorosilyl group-terminated polyoxypropylene-based polymer (H-1) was obtained.

(Example 58)

Next, to 100 parts by weight of the polymer (H-1) was added 10 parts by weight of trimethyl orthoformate, and thereto was added 3.2 parts by weight of dehydrated methanol dropwise at 70 °C. The reaction liquid was stirred for 20 min, and the change of the pH of the reaction liquid from acidic to neutral was checked using a pH test strip. Vacuum devolatilization was carried out again at 90°C for 2 hrs, and determination with $^1$H-NMR revealed a peak (2.82 ppm) representing $SiCH_2Cl$, a peak (3.59 ppm) representing $Si(OCH_3)_2$, and a peak (0.80, and 1.68 ppm) representing $SiCH_2CH_2$. Thus, it was ascertained that a chloromethyldimethoxysilyl group-terminated polyoxypropylene-based polymer (H-2) was obtained. In the $^1$H-NMR spectrum, an integrated value of the $CH_3$ peak in the main chain of the polymer (H-2) is designated as S-H2, and an integrated value of the $SiCH_2Cl$ peak is designated as M-H2. An induction rate (Fn) of the chloromethyldimethoxysilyl group was derived by the following formula:

$$Fn = (M\text{-}H2/S\text{-}H2)/\ (M\text{-}I1/S\text{-}I1)\ x\ 100\ (\%)$$

, whereby Fn was determined to be 80%. Thus, it was proven that the polymer (H-2) contains chloromethyldimethoxysilyl groups in the number of 1.6 on average per molecule.

(Example 59)

The allyl-terminated polyoxypropylene (I-1) in an amount of 100 parts by weight was allowed to react with 4.3 parts by weight of a mixture of chloromethyldimethoxysilane and chloromethyltrimethoxysilane (molar ratio of 77:23) at 90°C for 2 hrs using 200 ppm of an isopropyl alcohol solution of a platinum-vinylsiloxane complex having a platinum content of 3% by weight as a catalyst. Subsequently, the reaction liquid was subjected to volatilization under reduced pressure using a vacuum pump at 90°C for 2 hrs. Determination with $^1$H-NMR showed that a peak representing an allyl group disappeared, and a peak suggesting that a chloromethyldimethoxysilyl group was introduced was observed. Accordingly, it was confirmed that a chloromethyldimethoxysilyl group-terminated polyoxypropylene-based polymer (H-3) was obtained.

In the $^1$H-NMR spectrum, an integrated value of the $CH_3$ peak in the main chain of the polymer (H-3) is designated as S-H3, and an integrated value of the $SiCH_2Cl$ peak is designated as M-H3. An induction rate (Fn) of the chloromethyldimethoxysilyl group was derived by the following formula:

$$Fn = (M\text{-}H3/S\text{-}H3)/\ (M\text{-}I1/S\text{-}I1)\ x\ 100\ (\%)$$

, whereby Fn was determined to be 80%. Thus, it was proven that the polymer (H-3) contains chloromethyldimethoxysilyl groups in the number of 1.6 on average per molecule.

(Reference Example 5)

Operations similar to Reference Example 3 were carried out except that 2.9 parts by weight of triethoxysilane was used in place of dimethoxymethylsilane to obtain a triethoxysilyl group-terminated polyoxypropylene-based polymer (M-3). In addition, Fn of the polymer (M-3) was determined to be 80% in a similar manner to Reference Example 3. Thus, it was proven that the polymer (M-3) contains triethoxysilyl groups in the number of 1.6 on average per molecule.

(Example 60)

The allyl-terminated polyoxypropylene (I-1) in an amount of 100 parts by weight was allowed to react at 100°C for 5 hrs with 5.6 parts by weight of a mixture containing chloromethyldiethoxysilane obtained in Example 56 using 500 ppm of an isopropyl alcohol solution of a platinum-vinylsiloxane complex having a platinum content of 3% by weight as a catalyst. Subsequently, the reaction liquid was subjected to volatilization under reduced pressure using a vacuum pump at 100°C for 2 hrs. Determination with $^1$H-NMR showed that a peak representing an ally group disappeared, and a peak suggesting that a chloromethyldiethoxysilyl group was introduced was observed, whereas a chloromethyldiethoxysilyl-terminated polyoxypropylene-based polymer (H-4) was obtained. Fn of the polymer (H-4) was determined to be 53% in a similar manner to Example 57. Thus, it was proven that the polymer (H-4) has chloromethyldiethoxysilyl groups in the number of 1.1 on average per molecule.

(Reference Example 6)

To a reaction vessel in which a deoxygenated state had been provided were charged 0.84 parts by weight of cuprous bromide, and 20 parts by weight of n-butyl acrylate, followed by heating with stirring. Thereto were added 8.8 parts by weight of acetonitrile as a polymerization solvent, and 1.76 parts by weight of diethyl 2,5-dibromoadipate as an initiator, followed by mixing. Thereto was added pentamethyldiethylenetriamine (hereinafter, referred to as triamine) at about 80°C to initiate the polymerization. Next, 80 parts by weight of n-butyl acrylate was added thereto successively to allow the polymerization reaction to proceed. During the polymerization, the polymerization rate was regulated while adding triamine appropriately such that the internal temperature is maintained at about 80°C to 90°C. The total amount of triamine used in the polymerization was 0.15 parts by weight. When the conversion rate of the monomer (i.e., the rate of polymerization reaction) became not less than about 95%, unreacted n-butyl acrylate and acetonitrile were removed by volatilization under reduced pressure. Subsequently, 35 parts by weight of acetonitrile, 21 parts by weight of 1,7-octadiene, and 0.34 parts by weight of triamine were added thereto, and the mixture was stirred to restart the reaction. The reaction was allowed at about 80°C to 90°C for several hours to introduce an alkenyl group to the polymer terminal.

An oxygen-nitrogen gas mixture was introduced into a gas phase area of the reaction vessel, and the reaction solution was stirred for several hours while the internal temperature was maintained at about 80°C to 90°C to allow contacting with the polymerize catalyst and oxygen. After acetonitrile and octadiene were removed by volatilization under reduced pressure, thereto was added 150 parts by weight of butyl acetate, followed by dilution. Then, a filter aid was added thereto, and after the mixture was stirred, insoluble catalyst component was removed by filtration. The filtrate was charged into a reaction vessel, and 1 part by weight of aluminum silicate (manufactured by Kyowa Chemical Industry Co., Ltd., Kyowaad 700SEN), and 1 part by weight of hydrotalcite (manufactured by Kyowa Chemical Industry Co., Ltd., Kyowaad 500SH) were added thereto as an adsorbent. An oxygen-nitrogen gas mixture was introduced into the gas phase area, and after the mixture was stirred with heating at about 100°C for 1 hour, insoluble components such as adsorbent, etc., were removed by filtration. The filtrate was concentrated under reduced pressure to obtain crude polymer product.

To 100 parts by weight of the crude polymer product were added 0.2 parts by weight of a heat stabilizer (manufactured by Sumitomo Chemical Co., Ltd., Sumilizer GS), and Kyowaad 700SEN and Kyowaad 500SH as an adsorbent, and the temperature of the mixture was elevated while carrying out volatilization under reduced pressure and heating with stirring. Volatilization and stirring were continued in a high-temperature state of about 170°C to 200°C for several hours to execute elimination of halogen groups in the polymer, and adsorption purification. Thereto was introduced an oxygen-nitrogen gas mixture, followed by adding 10 parts by weight of butyl acetate and then further the aforementioned adsorbent. The mixture was kept heating with stirring in a high-temperature state of about 170°C to 200°C for several hours. With respect to the amount of the absorbents, 1.5 parts by weight of Kyowaad 700SEN, and 1.5 parts by weight of Kyowaad 500SH were used in this purification step in total. After the mixture was diluted with butyl acetate, and filtrated to remove the adsorbent, thus resulting filtrate was concentrated to obtain an acrylic acid ester-based polymer (1-2) having an alkenyl group at two termini.

The acrylic acid ester-based polymer (I-2) in an amount of 100 parts by weight was allowed to react at 100°C for 1 hour after adding thereto 300 ppm of an isopropyl alcohol solution of a platinum-vinylsiloxane complex having a platinum content of 3% by weight, 1.7 parts by weight of dimethoxymethylsilane, and 0.9 parts by weight of trimethyl orthoformate. The unreacted dimethoxymethylsilane was distilled of under reduced pressure to obtain a dimethoxymethylsilyl group-terminated acrylic acid ester-based polymer (M-4). The polymer (M-4) had a number average molecular weight of about 25,600 (polystyrene-equivalent molecular weight determined using shodex GPC K-804 manufactured by Showa Denko K.K., as a GPC column, with $CHCl_3$ as a solvent). In addition, the number of dimethoxymethylsilyl groups per molecule on average was 1.9 as determined based on the number average molecular weight and the terminal silyl group concentration calculated with a $^1$H-NMR spectrum.

(Example 61)

The acrylic acid ester-based polymer (1-2) in an amount of 100 parts by weight was allowed to react at 100°C for 4 hrs after adding thereto 670 ppm of an isopropyl alcohol solution of a platinum-vinylsiloxane complex having a platinum content of 3% by weight, 1.2 parts by weight of trimethyl orthoformate, and 4.1 parts by weight of chloromethyldimethoxysilane. Subsequently, the reaction liquid was subjected to volatilization under reduced pressure using a vacuum pump at 130°C for 2 hrs. Determination with $^1H$-NMR showed that a peak representing an alkenyl group disappeared, and a peak suggesting that a chloromethyldimethoxysilyl group was introduced was observed. Accordingly, it was confirmed that a chloromethyldimethoxysilyl-terminated polyacrylic acid ester-based polymer (H-5) was obtained.

In the $^1H$-NMR spectrum, an integrated value of the $-OCH_2CH_2CH_2CH_3$ peak in the main chain of the polymer (I-2) is designated as S-I2, and an integrated value of the terminal $CH_2$ peak of the alkenyl group is designated as M-I2. Further, an integrated value of the $-OCH_2CH_2CH_2CH_3$ peak in the main chain of the polymer (H-5) is designated as S-H5, and an integrated value of the $SiCH_2Cl$ peak is designated as M-H5. An induction rate (Fn) of the chloromethyldimethoxysilyl group was derived by the following formula:

$$Fn = (M\text{-}H5/S\text{-}H5)/(M\text{-}I2/S\text{-}I2) \times 100\ (\%)$$

, whereby Fn was determined to be 95%. Thus, it was proven that the polymer (H-5) contains chloromethyldimethoxysilyl groups in the number of 1.9 on average per molecule. Additionally, the polymer (H-5) had a number average molecular weight of about 25,600.

(Reference Example 7)

A T shape stopcock was attached to a 2-L pressure tight glass vessel, and after atmosphere in the vessel was replaced with a nitrogen atmosphere, 138 ml of ethylcyclohexane (dried by leaving to stand together with molecular sieves 3A at least overnight), 1,012 ml of toluene (dried by leaving to stand together with molecular sieves 3A at least overnight), and 8.14 g (35.2 mmol) of 1,4-bis(α-chloroisopropyl)benzene were added into the vessel using a syringe.

Next, a liquid-collecting tube made of pressure tight glass equipped with a needle valve including 254 ml (2.99 mol) of an isobutylene monomer was connected to the T shape stopcock, and after the polymerization vessel was cooled by immersing in a dry ice/ethanol bath at -70°C, the pressure in the vessel was reduced using a vacuum pump. After introducing the isobutylene monomer from the liquidified gas-collecting tube into the polymerization vessel by opening the needle valve, nitrogen was introduced from one end of the T shape stopcock to make the atmosphere in the vessel have ordinary pressure. Next, thereto was added 0.387 g (4.15 mmol) of 2-methylpyridine. Subsequently, 4.90 ml (44.7 mmol) of tetratitanium chloride was added to initiate the polymerization. After the reaction was allowed for a time period of 70 min, 9.65 g (13.4 mmol) of allyltrimethylsilane was added thereto to carry out a reaction of introducing an allyl group to the polymer terminal. After the reaction was allowed for a time period of 120 min, the reaction solution was washed with 200 ml of water four times, followed by distilling off the solvent to obtain an allyl-terminated isobutylene-based polymer (1-3).

(Example 62)

The allyl-terminated isobutylene-based polymer (1-3) in an amount of 100 parts by weight was allowed to react at 100°C for 6 hrs after adding thereto 200 ppm of an isopropyl alcohol solution of a platinum-vinylsiloxane complex having a platinum content of 3% by weight, 0.3 parts by weight of 2,5-di-tert-butyl-1,4-benzoquinone, and 6.7 parts by weight of chloromethyldimethoxysilane. Subsequently, the reaction liquid was subjected to volatilization under reduced pressure using a vacuum pump at 140 °C for 3 hrs. Determination with $^1H$-NMR showed that a peak representing an allyl group disappeared, and a peak suggesting that a chloromethyldimethoxysilyl group was introduced was observed. Accordingly, it was confirmed that a chloromethyldimethoxysilyl-terminated isobutylene-based polymer (H-6) was obtained.

In the $^1H$-NMR spectrum, an integrated value of the $CH_3$ peak in the main chain of the polymer (I-3) is designated as S-I3, and an integrated value of the terminal $CH_2$ peak of the allyl group is designated as M-I3. Further, an integrated value of the $CH_3$ peak in the main chain of the polymer (H-6) is designated as S-H6, and an integrated value of the $SiCH_2Cl$ peak is designated as M-H6. An induction rate (Fn) of the chloromethyldimethoxysilyl group was derived by the following formula:

$$Fn = (M\text{-}H6/S\text{-}H6)/(M\text{-}I3/S\text{-}I3) \times 100\ (\%)$$

, whereby Fn was determined to be 74%. Thus, it was proven that the polymer (H-6) contains chloromethyldimethoxysilyl groups in the number of 1.5 on average per molecule. Additionally, the polymer (H-6) had a number average molecular weight of 5,780 (polystyrene-equivalent molecular weight determined using for GPC, Waters LC Module 1 as a solvent delivery system and Shodex K-804 as a column).

(Examples 63 to 68, and Comparative Examples 1 to 5)

Curability of the reactive silicon group-containing organic polymer was evaluated according to the following method.

The polymer (H-2), or the polymer (M-1 or M-2) was weighed into a mini cup as shown in Table 15, and thereto were added an organic tin compound or an amine-based compound (J1) as a silanol condensation catalyst (J), followed by kneading well with a spatula for 1 min. After kneading, the cup was allowed to stand still in a temperature and humidity-controlled laboratory at 23°C and a humidity of 55%. This time point was specified as a curing onset time. By touching the surface of the composition with a tip of a spatula: every 1 min during the first 10 min; every 10 min thereafter until 2 hrs later; and every 1 hour in the following time period, the curing time was determined as a skin formation time at which adhesion of the composition to the spatula failed. The sample whose surface failed to cure even after 24 hrs was specified as "uncured". The results are shown in Table 15.

[Table 15]

| Composition (parts by weight) | | Example | | | | | | Comparative Example | | | | |
|---|---|---|---|---|---|---|---|---|---|---|---|---|
| | | 63 | 54 | 65 | 66 | 67 | 68 | 1 | 2 | 3 | 4 | 5 |
| Polymer (H) | H-2 | 100 | 100 | 100 | 100 | 100 | 100 | | | | | |
| Polymer (M) | M-1 | | | | | | | 100 | 100 | | 100 | 100 |
| | M-2 | | | | | | | | | 100 | | |
| Organic tin compound | Neostann U220H (1) | 2 | | | | | | 2 | | | | |
| Amine-based compound (J1) | DBU (2) | | 0.7 | | | | | | 0.7 | 2 | | |
| | phenyl guanidine (3) | | | 2 | | | | | | | | |
| | orthotolyl biguanide (4) | | | | 2 | | | | | | | |
| | DEAPA (5) | | | | | 2 | | | | | 2 | |
| | A1110 (6) | | | | | | 2 | | | | | 2 |
| Curability | skin formation time | 1 min | 1 min | 3 min | 8 min | 40 min | 100 min | 10 min | Uncured | 30 min | Uncured | Uncured |

(1): NITTO KASEI Co., Ltd., dibutyltin bisacetylacetonato
(2): Wako Pure Chemical Industries, Ltd., 1,8-diazabicyclo[5,4,0]undecene-7
(3): Nippon Carbide Industries Co.
(4): Aldrich Japan Co.
(5): Wako Pure Chemical Industries, Ltd., 3-diethylaminopropylamine
(6): Dow Corning Toray Co., Ltd., 3-aminopropyltrimethoxysilane

According to all the silanol condensation catalysts shown in the Table, shorter skin formation time was exhibited in the case of the polymer (H-2) than the polymer (M-1). In particular, the difference was marked when an amine-based compound was used.

Moreover, with respect to the cured product of Comparative Example 3, liquid matter exuded when the surface was inspected 1 week later. On the other hand, with respect to Example 64, even though a decreased amount of DBU was added, curing was achieved within a short period of time, and any liquid matter was not observed on the surface of the cured product even after 1 week.

(Examples 69 to 71, and Comparative Examples 6 to 8)

Curability of the chloromethyldiethoxysilyl-terminated polyoxypropylene-based polymer was evaluated according to the following method.

The polymer (H-4), or the polymer (M-3) was weighed into a mini cup as shown in Table 16, and thereto was added and an amine-based compound (J1) as a silanol condensation catalyst (J), followed by kneading with a spatula for 1 min. After kneading, the cup was allowed to stand still in a temperature and humidity-controlled laboratory at 23°C and a humidity of 55%. This time point was specified as a curing onset time. By touching the surface of the composition with a tip of a spatula: every 1 min during the first 10 min; every 5 min thereafter until 1 hour later; every 10 min thereafter until 2 hrs later; and every 1 hour in the following time period, the curing time was determined in terms of a time point at which adhesion of the composition to the spatula failed. The sample whose surface failed to cure even after 24 hrs was specified as "uncured". The results are shown in Table 16.

[Table 16]

| Composition (parts by weight) | | Example | | | Compar. Example | | |
|---|---|---|---|---|---|---|---|
| | | 69 | 70 | 71 | 6 | 7 | 8 |
| Polymer (H) | H-4 | 100 | 100 | 100 | | | |
| Polymer (M) | M-3 | | | | 100 | 100 | 100 |
| Amine-based compound (J1) | DBU (1) | 2 | | | 2 | | |
| | phenylguanidine (2) | | 2 | | | 2 | |
| | orthotolylbiguanide (3) | | | 2 | | | 2 |
| Curability | skin formation time | 15 min | 15 min | 20 min | Uncured | Uncured | Uncured |

(1): Wako Pure Chemical Industries, Ltd., 1,8-diazabicyclo[5,4,0]undecene-7
(2): Nippon Carbide Industries Co.
(3): Aldrich Japan Co.

According to all the silanol condensation catalysts shown in the Table, shorter skin formation time was exhibited in the case of the polymer (H-4) than the polymer (M-3).

(Examples 72 to 74, and Comparative Examples 9 to 11)

Curability of the chloromethyldimethoxysilyl-terminated polyacrylic acid ester-based polymer was evaluated according to the following method.

The polymer (H-5), or the polymer (M-4) was weighed into a mini cup as shown in Table 17, and thereto was added and an amine-based compound (JI) as a silanol condensation catalyst (J), followed by kneading with a spatula for 1 min. After kneading, the cup was allowed to stand still in a temperature and humidity-controlled laboratory at 23°C and a humidity of 55%. This time point was specified as a curing onset time. By touching the surface of the composition with a tip of a spatula: every 1 min during the first 10 min; every 5 min thereafter until 1 hour later; every 10 min thereafter until 2 hrs later; and every 1 hour in the following time period, the curing time was determined in terms of a time point at which adhesion of the composition to the spatula failed. When the surface of the sample failed to cure even after 24 hrs, decision as "uncured" was made. The results are shown in Table 17.

[Table 17]

| composition (parts by weight) | | Example | | | Comparative Example | | |
|---|---|---|---|---|---|---|---|
| | | 72 | 73 | 74 | 9 | 10 | 11 |
| Polymer (H) | H-5 | 100 | 100 | 100 | | | |
| Polymer (M) | M-4 | | | | 100 | 100 | 100 |
| Amine-based compound (J1) | DBU (1) | 2 | | | 2 | | |
| | phenylguanidine (2) | | 2 | | | 2 | |
| | Orthotolyl biguanide (3) | | | 2 | | | 2 |
| Curability | skin formation time | 1 min | 15 min | 25 min | 2 hrs or longer | 2 hrs or longer | Uncured |
| (1): Wako Pure Chemical Industries, Ltd., 1,8-diazabicyclo[5,4,0]undecene-7<br>(2): Nippon Carbide Industries Co.<br>(3): Aldrich Japan Co. | | | | | | | |

According to all the silanol condensation catalysts shown in the Table, shorter skin formation time was exhibited in the case of the polymer (H-5) than the polymer (M-4).

(Examples 75 to 77)

Curability of the chloromethyldimethoxysilyl-terminated isobutylene-based polymer was evaluated according to the following method.

The polymer (H-6) was weighed into a mini cup as shown in Table 18, and thereto was added and an amine-based compound (J1) as a silanol condensation catalyst (J), followed by kneading with a spatula for 1 min. After kneading, the cup was allowed to stand still in a temperature and humidity-controlled laboratory at 23°C and a humidity of 55%. This time point was specified as a curing onset time. By touching the surface of the composition with a tip of a spatula: every 1 min during the first 10 min; every 5 min thereafter until 1 hour later; every 10 min thereafter until 2 hrs later; and every 1 hour in the following time period, the curing time was determined in terms of a time point at which adhesion of the composition to the spatula failed. The sample whose surface failed to cure even after 24 hrs was specified as "uncured". The results are shown in Table 18.

[Table 18]

| Composition (parts by weight) | | Example | | |
|---|---|---|---|---|
| | | 75 | 76 | 77 |
| Polymer (H) | H-6 | 100 | 100 | 100 |
| Amino-based compound (J1) | DBU (1) | 2 | | |
| | phenylguanidine (2) | | 2 | |
| | orthotolylbiguanide (3) | | | 2 |
| Curability | skin formation time | 15 min | 20 min | 20 min |
| (1): Wako Pure Chemical Industries, Ltd., 1,8-diazabicyclo[5,4,0]undecene-7<br>(2): Nippon Carbide Industries Co.<br>(3): Aldrich Japan Co. | | | | |

According to all the silanol condensation catalysts shown in the Table, the polymer (H-6) exhibited superior curability.

(Reference Example 8)

Using polyoxypropylenediol having a molecular weight of about 2,000 as an initiator, propylene oxide was polymerized with a zinc hexacyanocobaltate glyme complex catalyst to obtain polyoxypropylene having a terminal hydroxyl group and having a number average molecular weight of about 28,500 (polystyrene-equivalent molecular weight determined using HLC-8120 GPC manufactured by Tosoh Corporation as a solvent delivery system and a TSK-GEL H type column manufactured by Tosoh Corporation, with THF as a solvent). Subsequently, thereto was added a methanol solution of NaOMe in an amount of 1.2 equivalents relative to the hydroxyl groups of this hydroxyl group-terminated polyoxypropylene, and methanol was distilled off. Furthermore, allyl chloride was added thereto to convert the terminal hydroxyl group to an allyl group. Unreacted allyl chloride was removed by volatilization under reduced pressure. To 100 parts by weight of thus obtained unpurified allyl group-terminated polyoxypropylene were added 300 parts by weight of n-hexane and 300 parts by weight of water, followed by mixing with stirring. Thereafter, water was removed by centrifugal separation, and 300 parts by weight of water was further added to the obtained hexane solution, followed by mixing with stirring. After water was removed again by centrifugal separation, hexane was removed by volatilization under reduced pressure. Accordingly, bifunctional polyoxypropylene (I-4) having a terminal allyl group and having a number average molecular weight of about 28,500 was obtained.

(Example 78)

To the allyl-terminated polyoxypropylene (1-4) obtained in Reference Example 8 in an amount of 100 parts by weight were added 100 ppm of an isopropyl alcohol solution of a platinum-vinylsiloxane complex having a platinum content of 3% by weight, and 1.2 parts by weight of trimethyl orthoformate, and the mixture was allowed to react with 1.7 parts by weight of chloromethyldimethoxysilane at 100°C for 2 hrs reaction. Subsequently, the reaction liquid was subjected to volatilization under reduced pressure using a vacuum pump at 120°C for 2 hrs. Determination with $^1$H-NMR showed that a peak representing an allyl group disappeared, and a peak (-SiC$\underline{H_2}$Cl: 2.82 ppm (singlet)) suggesting that a chloromethyldimethoxysilyl group was introduced was observed. Thus, it was ascertained that a chloromethyldimethoxysilyl group-terminated polyoxypropylene-based polymer (H-7) was obtained.

In the $^1$H-NMR spectrum, an integrated value of the $CH_3$ peak in the main chain of the polymer (1-4) is designated as S-I4, whereas an integrated value of the terminal $CH_2$ peak of the allyl group is designated as M-I4. Further, an integrated value of the $CH_3$ peak in the main chain of the polymer (H-7) is designated as S-H7, whereas an integrated value of the $SiCH_2Cl$ peak is designated as M-H7. An induction rate (Fn) of the chloromethyldimethoxysilyl group was derived by the following formula:

$$Fn = (M\text{-}H7/S\text{-}H7)/(M\text{-}I4/S\text{-}I4) \times 100\ (\%)$$

, whereby Fn was determined to be 80%. Thus, it was proven that the polyoxypropylene-based polymer (H-7) contains chloromethyldimethoxysilyl groups in the number of 1.6 on average per molecule.

(Example 79)

A chloromethyldimethoxysilyl group-terminated polyoxypropylene-based polymer (H-8) was obtained in a similar manner to Example 78 except that trimethyl orthoformate was not used. In addition, Fn was determined to be 80% according to a similar method to Example 78.

(Examples 80 to 83)

The polymers (H-7) and (H-8) were each transferred to a glass vial from the reaction vessel under conditions of 23°C and a humidity of 55%. The atmosphere in the vial was replaced with a nitrogen atmosphere, and capped. These samples were stored at temperatures shown in Table 12, and the viscosity of the polymer before storage (initial), 1 week later, 2 weeks later, and 4 weeks later starting the storage was each measured with an E type viscometer (VISCONIC EHD, manufactured by TOKYO KEIKI Co., Ltd., measurement temperature: 23°C). Storage stability was evaluated based on the ratio of viscosity after the storage with respect to the initial viscosity of the polymer (H-7) and the polymer (H-8), which was defined as a viscosity ratio (viscosity after storage/initial viscosity). The results are shown in Table 19.

[Table 19]

| Example | Polymer | Storage temperature | Viscosity ratio | | | |
|---|---|---|---|---|---|---|
| | | | initial | 1 week later | 2 weeks later | 4 weeks later |
| 80 | polymer (H-7) | 23°C | 1.0 | 1.0 | 1.0 | 1.1 |
| 81 | | 50°C | 1.0 | 1.1 | 1.0 | 0.9 |
| 82 | polymer (H-8) | 23°C | 1.0 | 1.2 | 1.3 | 1.4 |
| 83 | | 50°C | 1.0 | 1.3 | 1.3 | 1.3 |

Table 19 shows that the polymer (H-7) obtained by a reaction in the presence of trimethyl orthoformate during hydrosilylation exhibited superior storage stability with a low degree of elevation of the viscosity after storage, as compared with the polymer (H-8) subjected to hydrosilylation without using trimethyl orthoformate.

(Examples 84 and 85, and Comparative Examples 12 and 13)

The polymer (H) or (M), a filler, a pigment, a plasticizer, and various types of stabilizer were homogenously kneaded first according to the formulation shown in Table 20 using three rollers. Then, a silane coupling agent and a silanol condensation catalyst were added while allowing dehydration, and the mixture was homogenously kneaded using a planetary mixer. The kneaded composition was quickly enclosed into an aluminum cartridge to produce a one-pack curable composition. Note that 1-phenylguanidine used had been dissolved in N-n-butylbenzenesulfoneamide (manufactured by Fuji Amide Chemical Co., Ltd., trade name: TOPCIZER No. 7). Values in Table denote the amount of 1-phenylguanidine.

In a temperature and humidity-controlled laboratory at a room temperature of 23°C and a humidity of 50%, each curable composition was pushed out from the cartridge, and filled in a mold form having a thickness of about 5 mm using a spatula. A time point at which the surface was finished to give a planar state was specified as curing start time. By touching the surface with a spatula, the curing time was determined as a skin formation time at which adhesion of the compound to the spatula failed.

The results are shown in Table 20.

[Table 20]

| Composition (parts by weight) | | Example | | Comparative Example | |
|---|---|---|---|---|---|
| | | 84 | 85 | 12 | 13 |
| Polymer (H) | H-3 | 100 | 100 | | |
| Polymer (M) | M-1 | | | 100 | |
| | M-2 | | | | 100 |
| Filler | Hakuenka CCR (1) | 120 | 120 | 120 | 120 |
| Pigment | TIPAQUE R820 (2) | 20 | 20 | 20 | 20 |
| Plasticizer | DIDP (3) | 55 | 55 | 55 | 55 |
| Thixotropy imparting agent | DISPARLON (R) 6500 (4) | 2 | 2 | 2 | 2 |
| Ultraviolet ray absorbing agent | Sumisoap 400 (5) | 1 | 1 | 1 | 1 |
| Light stabilizer | Sanol LS770 (6) | 1 | 1 | 1 | 1 |
| Silane compound | A171 (7) | 3 | 3 | 3 | 3 |
| | A1110 (8) | 1.5 | 1.5 | 1.5 | 1.5 |
| | A1122 (9) | 1.5 | 1.5 | 1.5 | 1.5 |
| Catalyst (J) | Neostann U220H (10) | 2 | | 2 | |
| Amine-based compound (J1) | 1-phenylguanidine (11) | | 1.5 | | 1.5 |

(continued)

| Composition (parts by weight) | | Example | | Comparative Example | |
|---|---|---|---|---|---|
| | | 84 | 85 | 12 | 13 |
| Curability | Skin formation time | 7 min | 12 min | 12 min | 38 min |

(1): Shiraishi Kogyo Kaisha, Ltd., fatty acid-treated precipitated calcium carbonate
(2): Ishihara Sangyo Kaisha, Ltd., titanium oxide
(3): Kyowa Hakko Co., Ltd., diisodecyl phthalate
(4): Kusumoto Chemicals, Ltd., fatty amide wax
(5): Sumitomo Chemical Co., Ltd., 2,4-di-tert-butylphenyl -3,5-di-tert-butyl-4-hydroxybenzoate
(6): SANKYO Co.., Ltd., bis(2,2,6,6,-tetramethyl-4-piperidyl)sebacate
(7): Dow Corning Toray Co., Ltd., vinyltrimethoxysilane
(8): Dow Corning Toray Co., Ltd., 3-aminopropyltrimethoxysilane
(9): Dow Corning Toray Co., Ltd., 3-(2-aminoethyl)aminopropyltrimethoxysilane
(10): NITTO KASEI Co., Ltd., dibutyltin bisacetylacetonato
(11): Nippon Carbide Industries Co., 43 % by weight N-n-butylbenzenesulfoneamide solution

As shown in Table 20, the chloromethyldimethoxysilyl-terminated polymer (H-3) of the present invention exhibited more favorable curability as compared with the methyldimethoxysilyl group-containing polymer (M-1) or the trimethoxysilyl group-containing polymer (M-2).

(Reference Example 9)

A dimethoxymethylsilyl group-terminated polyoxypropylene-based polymer (M-5) having Fn of 65% was obtained by carrying out similar operations to Reference Example 3 except that 1.4 parts by weight of dimethoxymethylsilane was used.

(Example 86)

A chloromethyldimethoxysilyl group-terminated polyoxypropylene-based polymer (H-9) having Fn of 65% was obtained by carrying out similar operations to Reference Example 3 except that 1.8 parts by weight of chloromethyldimethoxysilane was used.

(Examples 87 to 90, and Comparative Example 14)

A one-pack curable composition was produced by similar operations to Example 84 according to the formulation shown in Table 21.
According to a similar method to Example 84, curing time was measured.
The results are shown in Table 21.

[Table 21]

| Composition (parts by weight) | | Example | | | | Compar. Example |
|---|---|---|---|---|---|---|
| | | 87 | 88 | 89 | 90 | 14 |
| Polymer (H) | H-9 | 100 | 100 | 100 | 100 | |
| Polymer (M) | M-5 | | | | | 100 |
| Filler | Hakuenka CCR (1) | 120 | 120 | 120 | 120 | 120 |
| Pigment | TIPAQUE R820 (2) | 20 | 20 | 20 | 20 | 20 |
| Plasticizer | DIDP (3) | 45 | 45 | 45 | 55 | 45 |
| | DMA (4) | 10 | 10 | 10 | | 10 |
| Thixotropy imparting agent | DISPARLON(R) 6500 (5) | 2 | 2 | 2 | 2 | 2 |

(continued)

| Composition (parts by weight) | | Example 87 | Example 88 | Example 89 | Example 90 | Compar. Example 14 |
|---|---|---|---|---|---|---|
| Ultraviolet ray absorbing agent | Sumisoap 400 (6) | 1 | 1 | 1 | 1 | 1 |
| Light stabilizer | Sanol LS770 (7) | 1 | 1 | 1 | 1 | 1 |
| Silane compound | A171 (8) | 3 | | | | 3 |
| | LS465 (9) | | 3.45 | | | |
| | Methyltrimethoxysilylmethylcarbamate | | | 4.24 | 4.24 | |
| | A1110 (10) | 1.5 | 1.5 | 1.5 | 1.5 | 1.5 |
| | A1122 (11) | 1.5 | 1.5 | 1.5 | 1.5 | 1.5 |
| Catalyst (J) | 1-phenylguanidine (12) | 1.5 | 1.5 | 1.5 | | 1.5 |
| Amine-based compound (J1) | DBU (13) | | | | 1 | |
| Curability | Skin formation time | 14 min | 5 min | 4 min | 13 min | 55 min |

(1): Shiraishi Kogyo Kaisha, Ltd., fatty acid-treated precipitated calcium carbonate
(2): Ishihara Sangyo Kaisha, Ltd., titanium oxide
(3): Kyowa Hakko Co., Ltd., diisodecyl phthalate
(4): DAIHACHI Chemical Industry Co., Ltd., dimethyl adipate
(5): Kusumoto Chemicals, Ltd., fatty amide wax
(6): Sumitomo Chemical Co., Ltd., 2,4-di-tert-butylphenyl -3,5-di-tert-butyl-4-hydroxybenzoate
(7): SANKYO Co.., Ltd., bis(2,2,6,6,-tetramethyl-4-piperidyl)sebacate
(8): Dow Corning Toray Co., Ltd., vinyltrimethoxysilane
(9): manufactured by Shin-Etsu Chemical Co., Ltd., chloromethyltrichlorosilane
(10): Dow Corning Toray Co., Ltd., 3-aminopropyltrimethoxysilane
(11): Dow Corning Toray Co., Ltd., 3-(2-aminoethyl)aminopropyltrimethoxysilane
(12): Nippon Carbide Industries Co., 43 % by weight N-n-butylbenzenesulfoneamide solution
(13): Wako Pure Chemical Industries, Ltd., 1,8-diazabicyclo[5,4,0]undecene-7

As shown in Table 21, the chloromethyldimethoxysilyl group-containing polymer (H-9) exhibited favorable curability as compared with the methyldimethoxysilyl group-containing polymer (M-5).

## Claims

**1.** (H) A polymer having a reactive silicon-containing group represented by the general formula (6):

$$-CHR^{13}CR^{13}_2\text{-}SiR^2_c\,(CR^1_{3-b}Y_b)_aZ_{3-a-c} \qquad (6)$$

(wherein, $R^1$ each independently represents a hydrogen atom or a substituted or unsubstituted hydrocarbon group having 1 to 20 carbon atoms; $R^2$ each independently represents a substituted or unsubstituted hydrocarbon group having 1 to 20 carbon atoms; Y represents a group selected from a halogen atom, $-OR^3$, $-NR^4R^5$, $-N=R^6$, $-SR^7$ (wherein $R^3$, $R^4$, $R^2$, and $R^7$ each represent a hydrogen atom or a substituted or unsubstituted hydrocarbon group having 1 to 20 carbon atoms; and $R^6$ represents a bivalent substituted or unsubstituted hydrocarbon group having 1 to 20 carbon atoms), a perfluoroalkyl group having 1 to 20 carbon atoms, and a cyano group; a is 1 or 2; b is any one of 1, 2 and 3; c is 1 or 0; and the sum of a and c does not exceed 2; $R^{13}$ each independently represents a hydrogen atom, or a substituted or unsubstituted hydrocarbon group having 1 to 20 carbon atoms; and Z each independently represents a hydroxyl group or a hydrolyzable group).

2. A method for producing the polymer (H) as recited in claim 1, comprising allowing (A) a halohydrosilane compound represented by the general formula (1) :

$$H\text{-}SiR^2_c(CR^1_{3-b}Y_b)_aX_{3-a-c} \qquad (1)$$

(wherein, $R^1$, $R^2$, Y, a, b and c are as defined above; X each independently represents a halogen atom), to react with (I) a polymer having an unsaturated group represented by the general formula (7):

$$-CR^{13}=CR^{13}_2 \qquad (7)$$

(wherein, $R^{13}$ is as defined above).

3. A method for producing the polymer (H) as recited in claim 1, comprising allowing (E) a alkoxyhydrosilane compound represented by the general formula (5):

$$H\text{-}SiR^2_c(CR^1_{3-b}Y_b)_a(OR^{12})_{3-a-c} \qquad (5)$$

(wherein, $R^1$, $R^2$, Y, a, b and c are as defined above; $R^{12}$ each independently represents a substituted or unsubstituted hydrocarbon group having 1 to 20 carbon atoms), to react with (I) a polymer having an unsaturated group represented by the general formula (7):

$$-CR^{13}=CR^{13}_2 \qquad (7)$$

(wherein, $R^{13}$ is as defined above).

4. The method for producing the polymer (H) according to claim 2 or 3, wherein at least one selected from trialkyl orthocarboxylate, and trialkyl phosphite is further used in combination.

5. The polymer (H) according to claim 1, wherein the main chain skeleton of the polymer (H) is at least one organic polymer selected from the group consisting of a polyoxyalkylene polymer, a saturated hydrocarbon polymer, and a (meth)acrylic ester polymer,

6. A curable composition comprising the polymer (H) according to claim 1 or 5, and (J) a silanol condensation catalyst.

7. The curable composition according to claim 6, wherein the silanol condensation catalyst (J) is (J1) an amine compound.

**Patentansprüche**

1. Polymer (H), das eine reaktionsfähige Gruppe, die Silizium enthält, aufweist, die durch die allgemeine Formel (6) dargestellt wird:

$$CHR^{13}CR^{13}_2\text{-}SiR^2_c(CR^1_{3-b}Y_b)_aZ_{3-a-c} \qquad (6)$$

(worin $R^1$ jeweils unabhängig ein Wasserstoffatom oder eine substituierte oder unsubstituierte Kohlenwasserstoffgruppe, die 1 bis 20 Kohlenstoffatome aufweist, darstellt; $R^2$ jeweils unabhängig eine substituierte oder unsubstituierte Kohlenwasserstoffgruppe, die 1 bis 20 Kohlenstoffatome aufweist, darstellt; Y eine Gruppe darstellt, ausgewählt aus einem Halogenatom, $-OR^3$, $-NR^4R^5$, $-N=R^6$, $-SR^7$ (worin $R^3$, $R^4$, $R^5$ und $R^7$ jeweils ein Wasserstoffatom oder eine substituierte oder unsubstituierte Kohlenwasserstoffgrupe, die 1 bis 20 Kohlenstoffatome aufweist, darstellen; und $R^6$ eine zweiwertige substituierte oder unsubstituierte Kohlenwasserstoffgruppe, die 1 bis 20 Kohlenstoffatome aufweist, darstellt), einer Perfluoralkylgruppe, die 1 bis 20 Kohlenstoffatome aufweist, und einer Cyanogruppe; a 1 oder 2 ist; b ein beliebiges von 1, 2 und 3 ist; c 1 oder 0 ist; und die Summe von a und c 2 nicht übersteigt; $R^{13}$ jeweils unabhängig ein Wasserstoffatom oder eine substituierte oder unsubstituierte Kohlenwasserstoffgruppe, die 1 bis 20 Kohlenstoffatome aufweist, darstellt; und Z jeweils unabhängig eine Hydroxylgruppe oder eine hydrolysierbare Gruppe darstellt).

2. Verfahren zur Herstellung des Polymers (H) wie in Anspruch 1 erwähnt, umfassend das Ermöglichen der Umsetzung

einer Halohydrosilanverbindung (A), die durch die allgemeine Formel (1) dargestellt wird:

$$H\text{-}SiR^2_c(CR^1_{3-b}Y_b)_aX_{3-a-c} \qquad (1)$$

(worin $R^1$, $R^2$, Y, a, b und c wie oben definiert sind; X jeweils unabhängig ein Halogenatom darstellt), mit einem Polymer (I), das eine ungesättigte Gruppe aufweist, die durch die allgemeine Formel (7) dargestellt wird:

$$-CR^{13}=CR^{13}_2 \qquad (7)$$

(worin $R^{13}$ wie oben definiert ist).

3. Verfahren zur Herstellung des Polymers (H) wie in Anspruch 1 erwähnt, umfassend das Ermöglichen der Umsetzung einer Alkoxyhydrosilanverbindung (E), die durch die allgemeine Formel (5) dargestellt wird:

$$H\text{-}SiR^2_c(CR^1_{3-b}Y_b)_a(OR^{12})_{3-a-c} \qquad (5)$$

(worin $R^1$, $R^2$, Y, a, b und c wie oben definiert sind; $R^{12}$ jeweils unabhängig eine substituierte oder unsubstituierte Kohlenwasserstoffgruppe, die 1 bis 20 Kohlenstoffatome aufweist, darstellt), mit einem Polymer (I), das eine ungesättigte Gruppe aufweist, die durch die allgemeine Formel (7) dargestellt wird:

$$-CR^{13}=CR^{13}_2 \qquad (7)$$

(worin $R^{13}$ wie oben definiert ist).

4. Verfahren zur Herstellung des Polymers (H) gemäß Anspruch 2 oder 3, worin ferner zumindest eines, ausgewählt aus Trialkylorthocarboxylat und Trialkylphosphit, in Kombination verwendet wird.

5. Polymer (H) gemäß Anspruch 1, worin das Hauptkettengerüst des Polymers (H) zumindest ein organisches Polymer ist, das aus der Gruppe ausgewählt ist, bestehend aus einem Polyoxyalkylenpolymer, einem gesättigten Kohlenwasserstoffpolymer und einem (Meth)acrylsäureesterpolymer.

6. Härtbare Zusammensetzung, umfassend das Polymer (H) gemäß Anspruch 1 oder 5 und einen Silanolkondensationskatalysator (J).

7. Härtbare Zusammensetzung gemäß Anspruch 6, worin der Silanolkondensationskatalysator (J) eine Aminverbindung (J1) ist.

## Revendications

1. (H) Polymère ayant un groupe réactif contenant du silicium représenté par la formule générale 6) :

$$-CHR^{13}CR^{13}_2\text{-}SiR^2_c(CR^1_{3-b}Y_b)_aZ_{3-a-c} \qquad (6)$$

(dans laquelle, $R^1$ chacun indépendamment représente un atome d'hydrogène ou un groupe hydrocarboné substitué ou non substitué ayant de 1 à 20 atomes de carbone ; $R^2$ chacun indépendamment représente un groupe hydrocarboné substitué ou non substitué ayant de 1 à 20 atomes de carbone ; Y représente un groupe sélectionné à partir d'un atome d'halogène, $-OR^3$, $-NR^4R^5$, $-N= R^6$, $-SR^7$ (dans lesquels $R^3$, $R^4$, $R^5$, et $R^7$ représentent chacun un atome d'hydrogène ou un groupe hydrocarboné substitué ou non substitué ayant de 1 à 20 atomes de carbone ; et $R^6$ représente un groupe hydrocarboné bivalent substitué ou non substitué ayant de 1 à 20 atomes de carbone), un groupe perfluoroalkyle ayant de 1 à 20 atomes de carbone, et un groupe cyano ; a est 1 ou 2 ; b est l'un quelconque de 1, 2 ou 3 ; c est 1 ou 0 ; et la somme de a et c ne dépasse pas 2, $R^{13}$ chacun indépendamment représente un atome d'hydrogène ou un groupe hydrocarboné substitué ou non substitué ayant de 1 à 20 atomes de carbone ; et Z chacun indépendamment représente un groupe hydroxyle ou un groupe hydrolysable).

2. Procédé pour produire le polymère (H) selon la revendication 1, comprenant l'étape consistant à permettre à (A) un composé halohydrosilane représenté par la formule générale (1) :

$$H\text{-}SiR^2_c(CR^1_{3\text{-}b}Y_b)_aX_{3\text{-}a\text{-}c} \quad (1)$$

(dans laquelle, $R^1$, $R^2$, Y, a, b et c sont définis comme ci-dessus ; X chacun indépendamment représente un atome d'halogène),
de réagir avec (I) un polymère ayant un groupe non saturé représenté par la formule générale (7) :

$$-CR^{13}=CR^{13}_2 \quad (7)$$

(dans laquelle, $R^{13}$ est défini comme ci-dessus).

3. Procédé pour produire le polymère (H) selon la revendication 1, comprenant l'étape consistant à permettre à (E) un composé alcoxyhydrosilane représenté par la formule générale (5) :

$$H\text{-}SiR^2_c(CR^1_{3\text{-}b}Y_b)_a(OR^{12})_{3\text{-}a\text{-}c} \quad (5)$$

(dans laquelle, $R^1$, $R^2$, Y, a, b et c sont définis comme ci-dessus ; $R^{12}$ chacun indépendamment représente un groupe hydrocarboné substitué ou non substitué ayant de 1 à 20 atomes de carbone),
de réagir avec (I) un polymère ayant un groupe non saturé représenté par la formule générale (7) :

$$-CR^{13}=CR^{13}_2 \quad (7)$$

(dans laquelle, $R^{13}$ est défini comme ci-dessus).

4. Procédé pour produire le polymère (H) selon la revendication 2 ou 3, dans lequel au moins un élément sélectionné à partir d'orthocarboxylate de trialkyle, et de phosphite de trialkyle est en outre utilisé en combinaison.

5. Polymère (H) selon la revendication 1, dans lequel le squelette de chaîne principale du polymère (H) est au moins un polymère organique sélectionné à partir du groupe consistant en un polymère de polyoxyalkylène, un polymère hydrocarboné saturé, et un polymère d' ester (méth)acrylique.

6. Composition pouvant être durcie comprenant le polymère (H) selon la revendication 1 ou 5, et (J) un catalyseur de condensation au silanol.

7. Composition pouvant être durcie selon la revendication 6, dans laquelle le catalyseur de condensation au silanol (J) est un composé amine (J1).

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP S5273998 A
- JP S5534798 B
- JP H5239073 A
- JP H69656 A
- WO 2008053875 A
- JP S61215623 A
- JP S4627250 B
- JP S5915336 B
- US 3278457 A
- US 3278458 A
- US 3278459 A
- US 3427256 A
- US 3427334 A
- US 3427335 A
- JP H10273512 A
- JP HLL060722 A
- WO 2006051799 A
- JP 2001115142 A
- JP H0469659 B
- JP H07108928 B
- JP S63254149 A
- JP S6422904 B
- JP 2001072854 A


### Non-patent literature cited in the description


- *J. Am. Chem. Soc.,* 1945, vol. 67, 1772
- *J. Organometal Chem.,* vol. 18, 371
- *J. Organometal Chem.,* vol. 30, 349
- *INORGANIC SYNTHESES.,* 1960, vol. 6, 37
- **J. P. KENNEDY et al.** J. polymer Sci., Polymer Chem. Ed. 1977, vol. 15, 2869-2892
- **MATYJASZEWSKI et al.** *Journal of the American Chemical Society,* 1995, vol. 117, 5614